# EUROPÄISCHE PATENTSCHRIFT

(11) **EP 3 927 475 B1**
(45) Veröffentlichungstag und Bekanntmachung des Hinweises auf die Patenterteilung: **16.08.2023**
(21) Anmeldenummer: 20706207.6
(22) Anmeldetag: 18.02.2020
(51) Int. Cl.: B08B 7/00, B29D 30/06

(54) **LASERHOCHGESCHWINDIGKEITS-REIFENREINIGUNGSVORRICHTUNG**
HIGH-SPEED LASER CLEANING APPARATUS FOR A TIRE
DISPOSITIF DE NETTOYAGE AU LASER À GRANDE VITESSE D'UN PNEU

(30) Priorität: 19.02.2019 DE 202019100947 U
(43) Veröffentlichungstag der Anmeldung: 29.12.2021
(73) Patentinhaber: 4JET Technologies GmbH, 52477 Alsdorf (DE)
(72) Erfinder: HILLMANN, Robert, 52076 Aachen (DE); KRAUS, Armin, 52457 Aldhoven (DE); LANGE, André, 52074 Aachen (DE)
(74) Vertreter: Dilg, Haeusler, Schindelmann Patentanwaltsgesellschaft mbH
(86) Internationale Anmeldenummer: PCT/EP2020/054202
(87) Internationale Veröffentlichungsnummer: WO 2020/169579

(56) Entgegenhaltungen:
- EP-A1- 3 175 974
- EP-A1- 3 281 810
- EP-A1- 3 375 538
- CN-A- 108 325 951
- CN-A- 108 941 067
- DE-B3-102013 220 066
- DE-U1-202012 104 243

## Beschreibung

EP 2 674 287 B1 offenbart ein Verfahren zum Aufbringen einer selbstdichtenden Pannenschutzschicht auf der Reifeninnenseite eines Fahrzeugluftreifens mit den Schritten a) Anordnen eines fertig vulkanisierten Reifens in einer Reinigungsvorrichtung, wobei infolge der Vulkanisation Schmiermittelrückstände auf der Reifeninnenseite anhaften, b) Anordnen einer Laser-Optik mit einer Haltevorrichtung in der Reinigungsvorrichtung, wobei der Laser-Strahl der Laser-Optik auf die Reifeninnenseite ausrichtbar ist, c) Aktivierung des Laser-Strahles, wobei der auf die Reifeninnenseite gerichtete Laser-Strahl zumindest teilweise die Schmiermittelrückstände durchdringt und über die Energie-Bestrahlung sowie eine thermische Erwärmung der Oberfläche die anhaftenden Schmiermittelrückstände von der der Oberfläche der Reifeninnenseite ablöst, wobei die Schmiermittelrückstände bei der Ablösung von der Reifeninnenseite gleichzeitig in einen pulverförmigen Zustand überführt werden, wobei der Laser-Strahl eine auf die Reifeninnenseite gerichtete linienförmige Projektion aufweist, wobei mit dem linienförmigen Laser-Strahl die Reifeninnenseite im Wesentlichen zwischen den Reifenschultern bestrahlt wird, d) Absaugen der pulverförmige Schmiermittelrückstände mit einer Saugvorrichtung, und e) Aufbringen einer selbstdichtenden Pannenschutzschicht auf der von Schmiermittelrückständen gereinigten Reifeninnenseite des Fahrzeugluftreifens.

EP 3 175 974 A1 betrifft ein Verfahren zum Laserreinigen einer Reifeninnenfläche und einen Luftreifen. Das offenbarte Verfahren umfasst ein Wiederholen eines Schritts, in welchem ein Strahlungspuls sequenziell über eine innerste Oberfläche eines Luftreifens geführt wird, um eine Sequenz von gereinigten Flächen zu erzeugen, wobei die Sequenz von gereinigten Flächen einen Streifen definiert, welcher einem kontinuierlichen nichtlinearen Weg folgt, der sich mindestens einen Umfang über die innerste Oberfläche erstreckt und eine Streifenbreite aufweist.

EP 3 281 810 A1 betrifft ein Verfahren zum Prozessieren eines Reifens.

EP 3 375 538 A1 betrifft ein Reifenreinigungssystem mit einem Laserkopf, welcher einen internen Galvano Spiegel aufweist, um den Laserstrahl in einer breiten Richtung zu scannen.

Die Dokumente DE 20 2012 104243 U und DE 10 2013 220 066 B3 betreffen Verfahren zum Reinigen einer Oberfläche eines Hohlraumes in einer Reifenform oder in einem Reifen.

CN 108325951 A betrifft ein Laserreinigungssystem und einen Laserreinigungskopf. Verwendet wird ein Scanspiegel und ein Scannen des Strahls wird durchgeführt durch Ändern des Einfallswinkels des Laserstrahles auf eine einzige Reflexionsoberfläche während der Rotation des Scanspiegels.

CN 108941067 A betrifft ein Hochgeschwindigkeitslaserreinigungsverfahren und einen Laserreinigungskopf, welcher dieses verwendet. Ein Scanspiegel hat eine Vielzahl von Scanreflexionsflächen, welche über den Umfang verteilt sind und die MW:bm entsprechende Scanbreite wird bestimmt durch die Anzahl und Struktur der Scanreflexionsflächen.

### ZUSAMMENFASSUNG

Angesichts der oben beschriebenen Situation gibt es ein Bedürfnis für eine Technik, welche Reifenreinigung mit verbesserten Charakteristika erlaubt.

Diesem Bedürfnis wird durch die Gegenstände der unabhängigen Patentansprüche Rechnung getragen. Die beanspruchte Erfindung ist durch die unabhängigen Patentansprüche definiert.

Vorteilhafte Ausführungsformen sind in den abhängigen Patentansprüchen angegeben.

Gemäß dem ersten Aspekt der hierin offenbarten Gegenstände wird eine Vorrichtung offenbart, insbesondere eine Reifenreinigungsvorrichtung zur Reinigung einer Innenoberfläche eines Reifens mittels Laserstrahlung.

Gemäß Ausführungsformen des ersten Aspektes wird eine Reifenreinigungsvorrichtung zur Reinigung einer Innenoberfläche eines Reifens mittels Laserstrahlung offenbart, die Reifenreinigungsvorrichtung aufweisend: eine Positioniervorrichtung, welche konfiguriert ist zum Positionieren eines Reifens, welcher eine Innenoberfläche aufweist und welcher eine Umfangsrichtung und eine Reifendrehachse definiert; einen Reinigungskopf, welcher konfiguriert ist zur Positionierung eines Abstrahlweges und Abgabe eines Laserstrahls entlang des Abstrahlweges auf die Innenoberfläche des Reifens; eine Steuervorrichtung, welche konfiguriert ist, um den Abstrahlweg und die Innenoberfläche relativ zueinander zu bewegen; wobei eine Relativbewegung eines Schnittpunktes des Abstrahlweges mit der Innenoberfläche einen Positionierungsweg über die Innenoberfläche des Reifens sowie eine Geschwindigkeit entlang des Positionierungsweges definiert; wobei entlang des Positionierungsweges die mittlere Geschwindigkeit des Schnittpunktes in der Umfangsrichtung mehr als 5 m/s beträgt.

Gemäß einem zweiten Aspekt der hierin offenbarten Gegenstände wird ein Reifenreinigungssystem offenbart.

Gemäß Ausführungsformen des zweiten Aspektes wird ein Reifenreinigungssystem offenbart, das Reifenreinigungssystem aufweisend: eine Reifenreinigungsvorrichtung nach dem ersten Aspekt oder einer Ausführungsform davon; und eine Laserquelle zum Erzeugen des Laserstrahles.

Gemäß einer Ausführungsform eines dritten Aspektes wird ein Reifen offenbart.

Gemäß Ausführungsformen des dritten Aspektes wird ein Reifen mit einer Innenoberfläche offenbart, wobei die Innenoberfläche mittels einer Reifenreinigungsvorrichtung gemäß dem ersten Aspekt oder einer Ausführungsform davon gereinigt ist.

Gemäß einem vierten Aspekt der hierin offenbarten Gegenstände wird ein Verfahren zum Reinigen eines Reifens offenbart.

Gemäß Ausführungsformen des vierten Aspektes weist das Verfahren auf: Positionieren eines Reifens, welcher eine Innenoberfläche aufweist und welcher eine Umfangsrichtung und eine Reifendrehachse definiert; Positionierung eines Abstrahlweges und Abgabe eines Laserstrahls entlang des Abstrahlweges auf die Innenoberfläche des Reifens; Bewegen des Abstrahlweges und der Innenoberfläche relativ zueinander; wobei eine Relativbewegung eines Schnittpunktes des Abstrahlweges mit der Innenoberfläche einen Positionierungsweg über die Innenoberfläche des Reifens sowie eine Geschwindigkeit entlang des Positionierungsweges definiert; wobei entlang des Positionierungsweges die mittlere Geschwindigkeit des Schnittpunktes in der Umfangsrichtung mehr als 5 m/s beträgt.

Gemäß einem fünften Aspekt der hierin offenbarten Gegenstände wird ein Computerprogrammprodukt, insbesondere ein nicht-transientes Computerprogrammprodukt offenbart, welches ein Programmelement aufweist.

Gemäß Ausführungsformen des fünften Aspektes wird ein Computerprogrammprodukt, insbesondere ein nicht-transientes Computerprogrammprodukt offenbart, welches ein Programmelement aufweist, wobei das Computerprogrammprodukt eingerichtet ist um, wenn das Programmelement auf einer Prozessorvorrichtung ausgeführt wird, ein Verfahren gemäß dem vierten Aspekt oder einer Ausführungsform davon auszuführen.

Verschiedene Aspekte und Ausführungsformen der hierin offenbarten Gegenstände basieren auf der Idee, dass eine Effizienz eines Reinigungsverfahrens gesteigert werden kann, indem die mittlere Geschwindigkeit der Relativbewegung zwischen Abstrahlweg und Innenoberfläche in Umfangsrichtung des Reifens groß gewählt wird. Ferner erlauben Ausführungsformen der hierin offenbarten Gegenstände eine hohe Relativgeschwindigkeit zwischen Abstrahlweg und Innenoberfläche. Die hohe Relativgeschwindigkeit wiederum erlaubt den Einsatz eines Lasers (hierin auch als Laserquelle bezeichnet) mit einer hohen mittleren Leistung. Typischerweise werden hohe mittlere Leistungen durch hohe Pulsfrequenzen erreicht. Die Pulsenergie (Energie pro Laserpuls) kann nicht beliebig erhöht werden, da es sonst in dem Strahlengang des Lasers (insbesondere in Lichtleitern wie beispielsweise einer Glasfaser) zu einer unerwünschten Mehr-Photonen-Absorption kommt.

Laser mit einer höheren Leistung haben typischerweise ein besseres (höheres) Leistung/Kosten-Verhältnis. Somit erlauben Ausführungsformen der hierin offenbarten Gegenstände eine effizientere Reinigung der Innenoberfläche eines Reifens.

Ferner wird gemäß Ausführungsformen der hierin offenbarten Gegenstände die Anzahl von Umkehrpunkten (in welchen die Richtung der Relativbewegung zwischen Abstrahlweg und Innenoberfläche geändert wird) oder Absetzpunkten bzw. ein Maß von Absatzstrecken (in welchen keine Laserstrahlung auf die Innenoberfläche abgegeben wird) gegenüber konventionellen Ansätzen reduziert.

Gemäß einer Ausführungsform kann die mittlere Geschwindigkeit der Relativbewegung zwischen Abstrahlweg und Innenoberfläche in Umfangsrichtung des Reifens beispielsweise dadurch groß gewählt werden, dass die Anzahl an Richtungsänderungen des Positionierungsweges und oder der Betrag der Richtungsänderung reduziert werden. Denn eine Richtungsänderung liefert ein Limit für die Geschwindigkeit bei der Richtungsänderung, da andernfalls die Beschleunigungen und die Belastungen der mechanischen Komponenten zu hoch werden würden.

Gemäß einer Ausführungsform umfasst die Reinigung der Innenoberfläche eines Reifens ein Entfernen von Trennmittel von der Innenoberfläche. Ein Trennmittel ist typischerweise nötig, um zu verhindern, dass der Reifen am Reifenbalk, mit dem der Reifen während der Vulkanisation in die Reifenform gepresst wird, anklebt. Ein Entfernen des Trennmittels ist erforderlich, um funktionale Elemente auf der Innenoberfläche des Reifens anbringen zu können, beispielsweise ein Geräusch reduzierendes Material und/oder Bauteile, welche die Funktionalität des Reifens erhöhen (beispielsweise Drucksensoren, etc.).

Gemäß Ausführungsformen des ersten Aspektes ist die Reifenreinigungsvorrichtung ausgebildet zum Liefern der Funktionalität von einer oder mehreren der hierin offenbarten Ausführungsformen und/oder zum Liefern der Funktionalität, wie sie für eine oder mehrere der hierin offenbarten Ausführungsformen erforderlich ist, insbesondere der Ausführungsformen des ersten, zweiten, dritten, vierten und/oder fünften Aspektes.

Gemäß Ausführungsformen des zweiten Aspektes ist das Reifenreinigungssystem ausgebildet zum Liefern der Funktionalität von einer oder mehreren der hierin offenbarten Ausführungsformen und/oder zum Liefern der Funktionalität, wie sie für eine oder mehrere der hierin offenbarten Ausführungsformen erforderlich ist, insbesondere der Ausführungsformen des ersten, zweiten, dritten, vierten und/oder fünften Aspektes.

Gemäß Ausführungsformen des dritten Aspektes ist der Reifen ausgebildet zum Liefern der Funktionalität von einer oder mehreren der hierin offenbarten Ausführungsformen und/oder zum Liefern der Funktionalität, wie sie für eine oder mehrere der hierin offenbarten Ausführungsformen erforderlich ist, insbesondere der Ausführungsformen des ersten, zweiten, dritten, vierten und/oder fünften Aspektes.

Gemäß Ausführungsformen des vierten Aspektes ist das Verfahren ausgebildet zum Liefern der Funktionalität von einer oder mehreren der hierin offenbarten Ausführungsformen und/oder zum Liefern der Funktionalität, wie sie für eine oder mehrere der hierin offenbarten Ausführungsformen erforderlich ist, insbesondere der Ausführungsformen des ersten, zweiten, dritten, vierten und/oder fünften Aspektes.

Gemäß Ausführungsformen des fünften Aspektes ist das Computerprogrammprodukt ausgebildet zum Liefern der Funktionalität von einer oder mehreren der hierin offenbarten Ausführungsformen und/oder zum Liefern der Funktionalität, wie sie für eine oder mehrere der hierin offenbarten Ausführungsformen erforderlich ist, insbesondere der Ausführungsformen des ersten, zweiten, dritten, vierten und/oder fünften Aspektes.

Weitere Vorteile und Merkmale der hierin offenbarten Gegenstände ergeben sich aus der folgenden beispielhaften Beschreibung derzeit bevorzugter Ausführungsformen, auf welche die vorliegende Offenbarung jedoch nicht beschränkt ist. Die einzelnen Figuren der Zeichnungen dieser Anmeldung sind lediglich als schematisch und als nicht notwendigerweise maßstabsgetreu anzusehen.

### KURZE BESCHREIBUNG DER ZEICHNUNGEN

Fig. 1 zeigt schematisch ein Reifenreinigungssystem gemäß Ausführungsformen der hierin offenbarten Gegenstände.
Fig. 2 zeigt einen Teil des Reifenreinigungssystems aus Fig. 1 in einer Draufsicht.
Fig. 3 zeigt eine Innenoberfläche eines Reifens gemäß Ausführungsformen der hierin offenbarten Gegenstände.
Fig. 4 zeigt eine weitere Innenoberfläche eines Reifens gemäß Ausführungsformen der hierin offenbarten Gegenstände.
Fig. 5 zeigt eine weitere Innenoberfläche eines Reifens gemäß Ausführungsformen der hierin offenbarten Gegenstände.
Fig. 6 zeigt eine weitere Innenoberfläche eines Reifens gemäß Ausführungsformen der hierin offenbarten Gegenstände.
Fig. 7 zeigt ein Reifenreinigungssystem gemäß Ausführungsformen der hierin offenbarten Gegenstände.
Fig. 8 zeigt ein weiteres Reifenreinigungssystem gemäß Ausführungsformen der hierin offenbarten Gegenstände.

### BESCHREIBUNG EXEMPLARISCHER AUSFÜHRUNGSFORMEN

Im Folgenden werden exemplarische Ausführungsformen der hierin offenbarten Gegenstände beschrieben, wobei beispielsweise auf eine Reifenreinigungsvorrichtung, ein Reifenreinigungssystem, einen Reifen, ein Verfahren und ein Computerprogrammprodukt Bezug genommen wird. Es sollte hervorgehoben werden, dass natürlich jede Kombination von Merkmalen verschiedener Aspekte, Ausführungsformen und Beispiele möglich ist. Insbesondere werden einige Ausführungsformen mit Bezug auf ein Verfahren oder ein Computerprogrammprodukt beschrieben, während andere Ausführungsformen mit Bezug auf eine Reifenreinigungsvorrichtung, ein Reifenreinigungssystem oder einen Reifen beschrieben werden. Jedoch wird der Fachmann der vorstehenden und der nachfolgenden Beschreibung, den Ansprüchen und den Zeichnungen entnehmen, dass, solange es nicht anders angegeben ist, Merkmale verschiedener Aspekte, Ausführungsformen und Beispiele kombinierbar sind und solche Kombinationen von Merkmalen als durch diese Anmeldung offenbart anzusehen sind. Beispielsweise ist selbst ein Merkmal, welches sich auf ein Verfahren oder ein Computerprogrammprodukt bezieht, mit einem Merkmal kombinierbar, welches sich auf eine Reifenreinigungsvorrichtung, ein Reifenreinigungssystem oder einen Reifen bezieht, und umgekehrt. Ferner ist ein Merkmal einer Ausführungsform, welches sich auf eine Reifenreinigungsvorrichtung, ein Reifenreinigungssystem oder einen Reifen bezieht, mit einem korrespondierenden Merkmal kombinierbar, welches sich auf ein Verfahren oder ein Computerprogrammprodukt bezieht. Mit der Offenbarung eines Verfahrens, einer Ausführungsform eines Verfahrens oder einer Funktion sind ferner ein oder mehrere Aktoren sowie eine mit den Aktoren zusammenwirkende Funktionalität einer Steuervorrichtung als offenbart anzusehen, welche zur Ausführung des Verfahrens bzw. der Funktion ausgebildet sind. Ferner ist mit der Offenbarung einer Funktion einer Vorrichtung ein entsprechendes Verfahren, welches die Funktion ohne Vorrichtungsmerkmale definiert, als offenbart anzusehen.

Wie hierin verwendet, ist eine Bezugnahme auf das Computerprogrammprodukt mit einem Programmelement äquivalent zu einer Bezugnahme auf das Programmelement und/oder ein computerlesbares Medium, welches ein Programmelement enthält, wobei das Programmelement eingerichtet ist zum Steuern der Prozessorvorrichtung (beispielsweise eines Computersystems) zum Bewirken und/oder Koordinieren der Ausführung von einem oder mehreren der oben beschriebenen Verfahren.

Das Programmelement kann implementiert sein als computerlesbarer Instruktionscode durch Verwendung von irgendeiner geeigneten Programmiersprache, wie beispielsweise, zum Beispiel, JAVA, C#, etc. und kann gespeichert sein auf einem computerlesbaren Medium (entfernbare Disc, flüchtiger oder nicht-flüchtiger Speicher, Embedded Speicher/Prozessor etc.). Der Instruktionscode ist betreibbar zum Programmieren eines Computers oder irgendeiner anderen programmierbaren Prozessorvorrichtung zum Ausführen der beabsichtigten Funktionen. Das Programmelement kann von einem Netzwerk verfügbar sein, beispielsweise von dem WorldWideWeb, von welchem es heruntergeladen werden kann.

Die hierin offenbarten Gegenstände können realisiert werden mittels eines Programmelements bzw. Software. Jedoch können die hierin offenbarten Gegenstände auch realisiert werden mittels einem oder mehreren spezifischen elektronischen Schaltungen bzw. Hardware. Ferner können die hierin offenbarten Gegenstände auch in Hybridform realisiert werden, d. h. in einer Kombination von Softwaremodulen und Hardwaremodulen.

Sofern nichts anderes angegeben ist, sind Zahlenwerte einschließlich eines ± 5 %-Fensters zu verstehen, d. h. beispielsweise eine Geschwindigkeitsangabe von 5 m/s umfasst gemäß einer Ausführungsform eine Geschwindigkeit innerhalb eines Intervalls von (5 ± 5 %) m/s = [4,75 m/s; 5,25 m/s] und eine Prozentangabe von 50 % umfasst gemäß einer Ausführungsform eine Prozentangabe innerhalb eines Intervalls von 50 % ± 5 % = [47,5 %; 52,5 %]. Gemäß einer weiteren Ausführungsform sind Zahlenwerte einschließlich eines ± 10 %-Fensters zu verstehen.

Gemäß Ausführungsform der Vorrichtung beträgt entlang des Positionierungsweges die mittlere Geschwindigkeit des Schnittpunktes in der Umfangsrichtung mehr als 5 m/s. Dieser Geschwindigkeitswert definiert somit ein unteres Geschwindigkeitslimit für die mittlere Geschwindigkeit des Schnittpunktes in der Umfangsrichtung gemäß Ausführungsformen der hierin offenbarten Gegenstände dar. Gemäß einer Ausführungsform beträgt die mittlere Geschwindigkeit des Schnittpunktes in der Umfangsrichtung beispielsweise mehr als 5 m/s, mehr als 10 m/s, mehr als 15 m/s, mehr als 20 m/s oder, gemäß einer nochmals anderen Ausführungsform, mehr als 25 m/s. Gemäß einer Ausführungsform des Verfahrens beträgt entlang des Positionierungsweges die mittlere Geschwindigkeit des Schnittpunktes in der Umfangsrichtung mehr als ein hierin offenbartes unteres Geschwindigkeitslimit, beispielsweise mehr als 5 m/s.

Die Reifendrehachse ist die Achse, um die sich der Reifen bei Benutzung dreht. Die Reifendrehachse kann daher auch als Funktionsachse bezeichnet werden. Die Umfangsrichtung erstreckt sich senkrecht zu der Reifendrehachse des Reifens.

Gemäß einer Ausführungsform ist das Reinigen ein Entfernen von Trennmittelresten aus dem Produktionsprozess des Reifens. Gemäß einer weiteren Ausführungsform wird bei der Reinigung ein Teil des Gummis der Innenoberfläche des Reifens entfernt und/oder die Oberfläche aufgeraut oder vergrößert.

Gemäß einer Ausführungsform ist die Innenoberfläche eine Innenoberfläche, welche dem Profil bzw. der Lauffläche des Reifens abgewandt angeordnet ist. Gemäß einer weiteren Ausführungsform ist die Innenoberfläche die Innenoberfläche einer Flanke des Reifens.

Gemäß einer Ausführungsform wird die mittlere Geschwindigkeit des Schnittpunktes bezüglich der Innenoberfläche in der Umfangsrichtung über ein Zeitintervall definiert (d. h., über das Zeitintervall wird die Geschwindigkeit des Schnittpunkts bezüglich der Innenoberfläche gemittelt). Beispielsweise ist gemäß einer Ausführungsform das Zeitintervall definiert durch die Taktzeit der Reinigung des Reifens, d. h. vom Beginn eines Einförderns des Reifens bis zum Beginn des Einförderns des nächsten Reifens. Gemäß einer weiteren Ausführungsform ist das Zeitintervall definiert durch eine Reinigungszeit der Innenoberfläche vom ersten Laserkontakt bis zum letzten Laserkontakt mit diesem Reifen. Gemäß einer weiteren Ausführungsform ist das Zeitintervall definiert durch eine Reinigungszeit einer (beliebigen) Teilfläche der Innenoberfläche, beispielsweise einer Teilfläche > 10 cm ². Gemäß einer weiteren Ausführungsform ist das Zeitintervall definiert durch einen vorbestimmten Zeitraum, beispielsweise einen Zeitraum von 20 Sekunden (20 s). Gemäß einer anderen Ausführungsform beträgt der vorbestimmte Zeitraum 10 s (oder 5 s; oder 2 s), oder, gemäß einer nochmals anderen Ausführungsform 1 s. Gemäß einer nochmals anderen Ausführungsform beträgt der vorbestimmte Zeitraum mindestens 0,1 s; 0,3 s; 0,5 s; oder, gemäß anderer Ausführungsform 0,9 s. Gemäß einer nochmals weiteren Ausführungsform ist das Zeitintervall definiert durch eine Drehung des Abstrahlweges und der Innenoberfläche relativ zueinander um 360 Grad.

Gemäß einer Ausführungsform ist die Relativbewegung zu mindestens 50 % durch Rotation von mindestens einem rotierbaren Element erzeugt. Gemäß einer weiteren Ausführungsform ist die Relativbewegung zu mindestens 70 %, oder in anderer Ausführungsform, zu mindestens 90 %, durch Rotation von mindestens einem rotierbaren Element erzeugt. Gemäß einer weiteren Ausführungsform umfasst das mindestens eine rotierbare Element mindestens eines der folgenden Elemente: den Reifen; den Abstrahlweg; ein optisches Element. Beispielsweise kann die Relativbewegung gemäß einer Ausführungsform mindestens teilweise durch Rotation des Reifens und/oder Rotation des Abstrahlweges erzeugt werden. Gemäß einer weiteren Ausführungsform ist die Relativbewegung teilweise durch eine lineare Bewegung von mindestens einem Element erzeugt. Beispielsweise kann die Relativbewegung teilweise durch lineare Bewegung des Reinigungskopfes und/oder des Reifens erfolgen. Gemäß einer Ausführungsform erfolgt die lineare Bewegung parallel zu der Reifendrehachse oder unter einem Neigungswinkel zu der Reifendrehachse. Gemäß einer Ausführungsform beträgt der Neigungswinkel höchstens 45 Grad, beispielsweise höchstens 30 Grad oder höchstens 20 Grad. Beispielsweise kann gemäß einer Ausführungsform vorgesehen sein, dass der Reinigungskopf konfiguriert ist für eine lineare Bewegung und dass die Positioniervorrichtung konfiguriert ist zum Rotieren des Reifens um die Reifendrehachse. Auf diese Weise ist ein Scanner, welcher den Abstrahlweg innerhalb eines Scanbereichs schwenkt, nicht erforderlich. Der Verzicht auf einen Scanner vereinfacht den Aufbau der Reifenreinigungsvorrichtung während gleichzeitig gemäß Ausführungsformen der hierin offenbarten Gegenstände eine hohe Reinigungsgeschwindigkeit erzielt werden kann. Entsprechend ist gemäß einer Ausführungsform der Abstrahlweg nicht schwenkbar. Gemäß einer Ausführungsform umfasst eine Bewegbarkeit des Abstrahlweges (sofern vorhanden) ausschließlich eine Rotierbarkeit oder eine lineare Bewegbarkeit. Eine lineare Bewegung des Abstrahlweges (beispielsweise durch lineare Bewegung des Reinigungskopfes) kann eine Absaugung von Verunreinigungen benachbart zu dem Abstrahlweg (bzw. dem Reinigungskopf) gegenüber einer Ausführungsform, bei der Reinigungskopf rotiert wird, vereinfachen.

Gemäß einer Ausführungsform definiert der Positionierungsweg in jedem Punkt (des Positionierungsweges) eine Wegrichtung entlang des Positionierungsweges, wobei die Wegrichtung einen ersten Richtungsanteil in der Umfangsrichtung und in einen zweiten Richtungsanteil parallel zu der Reifendrehachse aufweist. Mit anderen Worten ist der Vektor, welcher die Wegrichtung in einem Punkt des Positionierungsweges definiert, zerlegbar in den ersten Richtungsanteil in der Umfangsrichtung und den zweiten Richtungsanteil parallel zu der Reifendrehachse. Im Allgemeinen ist ein Vektor, welcher die Wegrichtung in einem Punkt des Positionierungsweges in drei Dimensionen definiert, vollständig definiert durch den ersten Richtungsanteil in der Umfangsrichtung, den zweiten Richtungsanteil parallel zu der Reifenachse und einen dritten Richtungsanteil in radialer Richtung (senkrecht zu der Reifendrehachse und senkrecht zu der Umfangsrichtung). Der zweite Richtungsanteil kann auch als axialer Richtungsanteil bezeichnet werden und der dritte Richtungsanteil kann auch als radialer Richtungsanteil bezeichnet werden. Eine Innenoberfläche, welcher der Lauffläche des Reifens entgegengesetzt angeordnet ist, kann gemäß einer Ausführungsform näherungsweise durch eine Zylinderfläche beschreibbar sein, so dass in diesem Fall der dritte Richtungsanteil in radialer Richtung null ist oder jedenfalls relativ klein ist. Für eine Innenoberfläche, welcher an den Reifenseitenwänden angeordnet ist, ist der dritte Richtungsanteil in radialer Richtung zumindest für Teilabschnitte des Positionierungsweges von Null verschieden. Im Einklang mit einer Ausführungsform sind jedoch der erste Richtungsanteil und der zweite Richtungsanteil in jedem Fall definiert, unabhängig vom Betrag des dritten Richtungsanteils.

Gemäß einer Ausführungsform ist die Wegrichtung in einem Punkt des Positionierungsweges definiert durch die Tangente an den Positionierungsweg durch diesen Punkt. Gemäß der Erfindung ist bei mindestens 70 % (oder, gemäß anderen Ausführungsform, bei mindestens 80 % oder bei mindestens 90 %) des Positionierungsweges der erste Richtungsanteil größer als der zweite Richtungsanteil.

Gemäß einer Ausführungsform ist bei dem angegebenen Prozentsatz (beispielsweise bei mindestens 70 % des Positionierungsweges) der erste Richtungsanteil in der Umfangsrichtung des Reifens mindestens doppelt so groß (oder, gemäß anderer Ausführungsform, mindestens dreimal so groß) wie der zweite Richtungsanteil parallel zur Reifendrehachse.

Gemäß einer Ausführungsform ist der zweite Richtungsanteil für mindestens einen Teil des Positionierungsweges Null (d. h. dieser Teil des Positionierungsweges erstreckt sich in Umfangsrichtung).

Gemäß einer Ausführungsform erzeugt der Laserstrahl auf dem Positionierungsweg eine Vielzahl von Laserspots. Gemäß einer weiteren Ausführungsform erzeugt jeder Laserspot der Vielzahl von Laserspots auf der Innenoberfläche je einen Bearbeitungsspot auf der Innenoberfläche. Beispielsweise wird gemäß einer Ausführungsform die Innenoberfläche durch den Laserspot gereinigt, wodurch der Bearbeitungsspot erzeugt wird. Gemäß einer Ausführungsform definieren mehrere aufeinanderfolgende Bearbeitungsspots (insbesondere zeitlich aufeinanderfolgende Bearbeitungsspots) auf der Innenoberfläche des Reifens einen Bearbeitungsweg, längs welchem die Innenoberfläche gereinigt ist. Gemäß einer Ausführungsform verläuft der Bearbeitungsweg mindestens abschnittsweise in parallelen Kreisbahnen und/oder der Bearbeitungsweg verläuft mindestens abschnittsweise helixförmig. Beispielsweise weist der Bearbeitungsweg gemäß einer Ausführungsform einen geradlinigen Abschnitt auf und einen Querabschnitt, der schräg zu dem geradlinigen Abschnitt verläuft. Beispielsweise kann der geradlinige Abschnitt eine (parallele) Kreisbahn sein. Allgemein weist der Bearbeitungsweg gemäß einer Ausführungsform zwei oder mehr parallele Abschnitte auf. Beispielsweise überbrückt der Querabschnitt gemäß einer Ausführungsform einen Gangunterschied zwischen benachbarten parallelen Kreisbahnen. Gemäß einer Ausführungsform kann sich der Querabschnitt bezüglich der Reifendrehachse über einen Winkelbereich (d. h. über ein Winkelsegment) von mindestens 10 Grad, beispielsweise mindestens 20 Grad, mindestens 30 Grad oder mindestens 50 Grad, erstrecken. In diesem Sinne entspricht ein Querabschnitt, der sich über 360 Grad erstreckt, einem helixförmigen Bearbeitungsweg. Gemäß einer Ausführungsform beträgt der Winkelbereich höchstens 180 Grad, beispielsweise höchstens 120 Grad oder höchstens 90 Grad. Je größer der Winkelbereich, desto geringer ist die Steigung in dem Querabschnitt und desto geringer sind die mechanischen Belastungen für Teile der Reifenreinigungsvorrichtung bei einem Wechsel von einer ersten parallelen Kreisbahn zur einer angrenzenden zweiten parallelen Kreisbahn. Gemäß einer Ausführungsform kann vorgesehen sein, dass der Querabschnitt mindestens eine parallele Kreisbahn schneidet (d. h. mit mindestens einer parallelen Kreisbahn überlappt).

Gemäß einer Ausführungsform ist die Vielzahl von Laserspots eine echte Teilmenge aller auf dem Positionierungsweg erzeugten Laserspots, d. h. die Vielzahl von Laserspots umfasst nicht alle Laserspots, die auf dem Positionierungsweg erzeugt werden.

Gemäß einer Ausführungsform erzeugt der Laserstrahl auf dem Positionierungsweg eine Vielzahl von Laserspots wobei benachbarte Laserspots einander überlappen. Gemäß einer weiteren Ausführungsform überlappen (jeweils) zwei benachbarte Laserspots entlang einer ersten Richtung über eine Länge, die 0 %, 50 %, 67 % 75 %, 80 % oder 90 % der Ausdehnung von einem der Laserspots in der ersten Richtung ist. Für die angegebenen Zahlenwerte wird ein homogener Abtrag (homogene Reinigung) erreicht. Mit anderen Worten wird für die angegebenen Zahlenwerte die Innenoberfläche entlang der ersten Richtung homogen mit einer bestimmten Anzahl von Laserspots beleuchtet. Beispielsweise wird bei einer Überlappung von 50 % (Überlapp 1/2) die Innenoberfläche (bzw. jeder Teil der Innenoberfläche) entlang der ersten Richtung zweimal mit einem Laserspot beleuchtet, bei 67 % (Überlapp 2/3) dreimal.

Gemäß einer Ausführungsform sind die in der ersten Richtung benachbarten Laserspots zeitlich aufeinanderfolgende Laserspots. Gemäß einer weiteren Ausführungsform sind die in der ersten Richtung benachbarten Laserspots Laserspots, die in einer Richtung parallel zu der Reifendrehachse (d. h. in axialer Richtung) überlappen. Gemäß einer Ausführungsform überlappen Laserspots sowohl entlang des Positionierungsweges als auch quer (beispielsweise senkrecht) zu dem Positionierungsweg, beispielsweise in Umfangsrichtung und in axialer Richtung. Beispielsweise kann gemäß einer Ausführungsform vorgesehen sein, dass die Überlappung entlang des Positionierungsweges 67 % beträgt und dass die Überlappung senkrecht zu dem Positionierungsweges ebenfalls 67 % beträgt, wodurch die Überlappungsbereiche insgesamt neunmal mit einem Laserspot beleuchtet werden.

Gemäß einer Ausführungsform ist mindestens ein Teil der Laserspots, die in Richtung der Reifendrehachse benachbart sind, in der Reifenumfangsrichtung um mehr als 10 % ihrer Ausdehnung in der Umfangsrichtung gegeneinander verschoben. Gemäß einer weiteren Ausführungsform ist die Verschiebung axial benachbarter Laserspots in Umfangsrichtung mindestens 15 % (oder in nochmals anderer Ausführungsform, mindestens 20 %) der Ausdehnung der Bearbeitungsspots in der Umfangsrichtung.

Der Überlapp ist im Rahmen üblicher Toleranzen definiert, beispielsweise mit einer Genauigkeit von ± 5 -Prozentpunkte. Beispielsweise schließt demnach ein Überlapp von 50 % im Rahmen der Toleranz einen Überlapp im Bereich zwischen 45 % und 55 % ein. Gemäß einer weiteren Ausführungsform beträgt die Toleranz ± 10 Prozentpunkte, insbesondere bei einem Überlappungsbereich von 0 % (d. h. wenn die (in der ersten Richtung) benachbarten Laserspots unmittelbar aneinander angrenzen).

Gemäß einer Ausführungsform weisen 50 % aller Laserspots einen entsprechenden Überlapp mit (mindestens) einem benachbarten Laserspot auf.

Gemäß einer Ausführungsform verläuft die erste Richtung entlang des Positionierungsweges. Beispielsweise sind gemäß einer Ausführungsform die zwei benachbarten Laserspots zeitlich unmittelbar aufeinander folgende Laserspots und die erste Richtung entspricht der Richtung eines Abstandsvektors zwischen zwei zeitlich unmittelbar aufeinanderfolgenden Laserspots. Gemäß einer weiteren Ausführungsform ist die erste Richtung definiert durch die Richtung eines Abstandsvektors zwischen zwei benachbarten Laserspots, die zeitlich nicht unmittelbar aufeinander folgen, beispielsweise zwei Laserspots, die in Richtung der Reifendrehachse benachbart sind.

Gemäß einer Ausführungsform erzeugt der Laserstrahl die Vielzahl von Laserspots / Bearbeitungsspots zeitlich nacheinander. Gemäß einer Ausführungsform wird die Vielzahl von Laserspots durch Einsatz eines gepulsten Lasers erzeugt. In diesem Falle wird der Puls-Überlapp zweier zeitlich aufeinanderfolgender Laserspots definiert durch Pulsfrequenz des Lasers, Größe des Laserspots und Relativgeschwindigkeit zwischen dem Schnittpunkt (Schnittpunkt des Abstrahlweges mit der Reifeninnenoberfläche) und der Reifeninnenoberfläche. Gemäß einer weiteren Ausführungsform wird der Laser durch die Steuervorrichtung mindestens zeitweise ausgeschaltet oder durch einen Shutter blockiert und der Überlapp wird definiert durch den Zeitpunkt des Einschaltens des Lasers / Öffnens des Shutters.

Gemäß einer Ausführungsform definieren die Laserspots (d.h. die Spots des Laserstrahls) Bearbeitungsspots (d. h. Oberflächenbereiche) auf der Innenoberfläche, in welchen die Innenoberfläche bearbeitet (gereinigt) ist. In diesem Sinne definiert der Teil des Positionierungsweges, in welchem der Laserstrahl auf die Innenoberfläche abgegeben wurde, einen Bearbeitungsweg, längs welchem die Innenoberfläche bearbeitet wurde. Die Wegrichtung des Bearbeitungsweges stimmt daher zumindest in Teilbereichen (beispielsweise außer an Absetzstellen) mit der betreffenden Wegrichtung des Positionierungsweges überein.

Gemäß einer Ausführungsform wird der Laserstrahl über 100 % des Positionierungsweges oder, gemäß anderer Ausführungsform nur über mindestens 95 % (oder mindestens 90 % oder, gemäß nochmals anderer Ausführungsform, mindestens 80 %) des Positionierungsweges auf die Innenoberfläche abgegeben. In Bereichen des Positionierungsweges, auf denen der Laserstrahl nicht abgegeben wird, kann der Laser beispielsweise ausgeschaltet oder der Laserstrahl durch einen Shutter blockiert werden. Mit anderen Worten sind der Positionierungsweg und der Bearbeitungsweg gemäß einer Ausführungsform zu 100 % identisch. Gemäß den entsprechenden anderen Ausführungsformen sind der Positionierungsweg und der Bearbeitungsweg zu mindestens 95 %, mindestens 90 % bzw. mindestens 80 % identisch.

Gemäß einer Ausführungsform ist die Positioniervorrichtung konfiguriert zum Rotieren des Reifens und die Steuervorrichtung ist konfiguriert, um die Relativbewegung des Schnittpunktes mindestens teilweise durch das Rotieren des Reifens um seine Drehachse zu bewirken.

Gemäß einer Ausführungsform ist der Reinigungskopf konfiguriert zum Rotieren des Abstrahlweges. Beispielsweise weist der Reinigungskopf gemäß einer Ausführungsform mindestens ein rotierbares optisches Element auf. Gemäß einer weiteren Ausführungsform ist der Reinigungskopf rotierbar zum dadurch Rotieren des Abstrahlweges. Gemäß einer Ausführungsform ist die Steuervorrichtung konfiguriert, um die Relativbewegung des Schnittpunktes mindestens teilweise durch das Rotieren des Abstrahlweges, insbesondere durch ein Rotieren des Abstrahlweges um die Reifendrehachse, zu bewirken.

Gemäß einer Ausführungsform weist der Reinigungskopf ein Strahlabgabeelement (z. B. ein optisches Element) auf, von welchem sich der Abstrahlweg geradlinig zu der inneren Oberfläche erstreckt.

Gemäß einer Ausführungsform ist das Strahlabgabeelement rotierbar. Gemäß einer weiteren Ausführungsform ist das Strahlabgabeelement rotationsfest bezüglich des Reinigungskopfes angeordnet und wird zusammen mit dem Reinigungskopf rotiert. Gemäß einer weiteren Ausführungsform ist das Strahlabgabeelement bezüglich des Reinigungskopfes rotierbar angeordnet.

Gemäß einer Ausführungsform weist die Reifenreinigungsvorrichtung ein Kompensationselement auf, welches eine Rotation des Laserstrahls um seine Mittelachse, die durch die Rotation des Abstrahlweges erzeugt ist, kompensiert. Mit anderen Worten kompensiert das Kompensationselement eine Rotation des Laserspots um die Mittelachse des Laserstrahls (bzw. um die Mittelachse des Abstrahlweges oder um den Mittelpunkt des Laserspots).

Gemäß einer weiteren Ausführungsform ist das Kompensationselement in einem Strahlungsweg des Laserstrahls (insbesondere zwischen einer Laserquelle und dem Strahlabgabelement) angeordnet. Beispielsweise umfasst das Kompensationselement mindestens ein (weiteres) rotierendes optisches Element. Gemäß eine Ausführungsform handelt es sich bei dem Kompensationselement um ein Dove-Prisma oder, gemäß einer anderen Ausführungsform, beispielsweise eine Anordnung von 2n+1 seriellen Spiegeln, wobei n eine natürliche Zahl ist. Falls das Strahlabgabeelement ein rotierendes optisches Element ist, rotiert gemäß einer Ausführungsform das Kompensationselement mit der halben oder der doppelten Winkelgeschwindigkeit wie das rotierende Strahlabgabeelement.

Gemäß einer Ausführungsform erfolgt die Relativbewegung des Schnittpunktes zu mehr als 90 % durch das Rotieren des Reifens und/oder durch das Rotieren des Abstrahlweges (beispielsweise um eine Achse die parallel zu der Reifendrehachse verläuft oder eine Achse, die um weniger als 10 Grad bezüglich der Reifendrehachse geneigt ist). Gemäß einer weiteren Ausführungsform erfolgt die Relativbewegung des Schnittpunktes zu mehr als 80 % (oder, gemäß anderer Ausführungsform, zu mehr als 95 %) durch das Rotieren des Reifens und/oder durch das Rotieren des Abstrahlweges. Gemäß einer Ausführungsform erfolgt das Rotieren des Reifens und/oder das Rotieren des Abstrahlweges um die Reifendrehachse.

Gemäß einer Ausführungsform weist die Reinigungsvorrichtung eine Absaugvorrichtung zum Absaugen von Verunreinigungen, die durch das Reinigen des Reifens entstehen, auf. Gemäß einer weiteren Ausführungsform weist die Absaugvorrichtung eine Absaugöffnung auf, durch welche die Verunreinigungen abgesaugt werden. Gemäß einer Ausführungsform wird die Absaugöffnung benachbart zu dem Schnittpunkt des Abstrahlweges mit der Innenoberfläche positioniert. Beispielsweise wird gemäß einer Ausführungsform die Absaugöffnung dem Schnittpunkt des Abstrahlweges mit der Innenoberfläche nachgeführt. Beispielsweise kann die Absaugöffnung benachbart zu dem Reinigungskopf positioniert sein und mit dem Reinigungskopf verfahrbar sein. Gemäß einer weiteren Ausführungsform kann die Absaugvorrichtung ausgebildet sein, um den gesamten Innenraum des Reifens (welcher insbesondere durch die Innenoberfläche des Reifens definiert wird) abzusaugen. Gemäß einer Ausführungsform ist ein Volumenstrom der Absaugvorrichtung an die Position und/oder die Größe der Absaugöffnung angepasst.

Gemäß einer Ausführungsform ist der Laserstrahl ein gepulster Laserstrahl. Gemäß einer weiteren Ausführungsform weist der Laserstrahl eine mittlere Leistung von mindestens 500 Watt (500 W) auf. Gemäß einer weiteren Ausführungsform weist der Laserstrahl eine mittlere Leistung von mindestens 1000 W auf. Gemäß einer Ausführungsform ist der Laserstrahl ein gepulster Laserstrahl mit einer Pulsfrequenz zwischen 1 kHz und 1000 kHz bei einer mittleren Leistung zwischen 1 kW und 10 kW. Beispielsweise beträgt gemäß einer Ausführungsform die Pulsfrequenz zwischen 10 kHz und 300 kHz bei einer mittleren Leistung zwischen 1 kW und 3 kW, beispielsweise 2 kW. Gemäß einer weiteren beträgt die Pulsfrequenz zwischen 30 kHz und 500 kHz bei einer mittleren Leistung zwischen 3 kW bis 5 kW, beispielsweise 4 kW. Gemäß einer Ausführungsform beträgt die Fluenz (pro Puls) zwischen 1 Joule/Quadratzentimeter (J/cm²) bis 3 J/cm², beispielsweise zwischen 1,5 J/cm² und 2,5 J/cm². Die Geschwindigkeit des Schnittpunkts ist abhängig von den verwendeten Laserparametern (Leistung, Pulsüberlapp und Fluenz). Beispielsweise ist bei 2000 W Leistung die Geschwindigkeit des Schnittpunkts gemäß einer Ausführungsform im Bereich von 10 m/s bis 25 m/s. Bei 1000 W ist die Geschwindigkeit des Schnittpunts im Bereich von 5 m/s bis 12,5 m/s.

Gemäß einer Ausführungsform ist der Laserspot ein rechteckiger Laserspot, insbesondere ein rechteckiger Laserspot, der eine längere Seite und eine kürzere Seite aufweist, wobei die längere Seite eine Abmessung (Länge) aufweist, die mindestens dem 1,5-fachen der Abmessung der kürzeren Seite (Breite) des Laserspots entspricht. Die Form des Laserspots (bzw. die Querschnittsform des Laserstrahles) kann beispielsweise durch eine Faser mit einem entsprechenden Faserquerschnitt definiert sein.

Gemäß einer Ausführungsform ist der Laserspot ein rechteckiger Laserspot und bei mindestens 70 % des Positionierungsweges bildet die Wegrichtung mit einer Seite des rechteckigen Laserspots einen Winkel zwischen 80° und 100°, insbesondere einen Winkel von 90°. Bei einer Ausführungsform, in welcher der rechteckige Laserspot eine längere Seite und eine kürzere Seite aufweist, bildet gemäß einer weiteren Ausführungsform die Wegrichtung mit der längeren Seite des rechteckigen Laserspots einen Winkel zwischen 80° und 100°, insbesondere einen Winkel von 90°.

Gemäß einer Ausführungsform bildet bei mindestens 80 % des Positionierungsweges die Wegrichtung mit einer Seite (beispielsweise der längeren Seite) des rechteckigen Laserspots einen Winkel zwischen 80° und 100°, insbesondere einen Winkel von 90°.

Ein rechteckiger Laserspot, welcher eine längere Seite und eine kürzere Seite aufweist, wobei die längere Seite mit der Wegrichtung einen Winkel zwischen 80 Grad und 100 Grad bildet, hat den Vorteil, dass in der Wegrichtung ein bestimmter Überlapp von benachbarten Laserpulsen auch bei relativ geringer Relativgeschwindigkeit zwischen dem Schnittpunkt und Innenoberfläche möglich ist.

Gemäß einer Ausführungsform ist die Reifenreinigungsvorrichtung eine separate Reifenreinigungsvorrichtung, welche ohne Laserquelle vertrieben wird und welche an eine externe Laserquelle koppelbar ist.

Gemäß einer Ausführungsform weist ein Reifenreinigungssystem eine Reifenreinigungsvorrichtung gemäß einer oder mehreren der hierin offenbarten Ausführungsformen auf. Gemäß einer weiteren Ausführungsform weist das Reifenreinigungssystem eine Laserquelle zum Erzeugen des Laserstrahles auf. Gemäß einer Ausführungsform ist die Laserquelle austauschbar in dem Reifenreinigungssystem angeordnet.

Gemäß einer Ausführungsform weist das Reifenreinigungssystem ferner (mindestens) eine weitere Reifenreinigungsvorrichtung gemäß einer oder mehreren der hierin offenbarten Ausführungsformen und eine Umschaltvorrichtung auf. Gemäß einer Ausführungsform ist mittels der Umschaltvorrichtung der Laserstrahl alternativ der Reifenreinigungsvorrichtung (beispielsweise einer ersten Reifenreinigungsvorrichtung) oder der (bzw. einer der mindestens einen) weiteren Reifenreinigungsvorrichtung (beispielsweise einer zweiten Reifenreinigungsvorrichtung) zuführbar. Durch die Umschaltvorrichtung kann die Leistung der Laserquelle effizient auf die erste und die zweite Reinigungsvorrichtung (und gegebenenfalls weitere Reifenreinigungsvorrichtung) verteilt werden. Beispielsweise kann vorgesehen sein, dass, während die erste Reinigungsvorrichtung einen ersten Reifen reinigt, ein zweiter Reifen in der zweiten Reinigungsvorrichtung positioniert wird und nach der Reinigung des ersten Reifens die Laserquelle auf die zweite Reinigungsvorrichtung umgeschaltet wird (Swing-Betrieb). Der Swingbetrieb wird umso wirtschaftlicher, je kürzer die Reinigungszeiten im Vergleich zu den Positionierzeiten werden. Eine Umschaltvorrichtung wird daher insbesondere bei der Implementierung von Ausführungsformen der hierin offenbarten Gegenstände sinnvoll, welche eine Reinigungszeit gegenüber konventionellen Lösungen verkürzen und dadurch die Zeitdauer, die zur Positionierung des Reifens in der Reinigungsvorrichtung benötigt wird, relevant wird für den gesamten Reinigungszyklus, welcher insbesondere die Positionierung des Reifens sowie die Reinigung der Innenoberfläche des Reifens umfasst.

Gemäß einer Ausführungsform weist die Reinigungsvorrichtung oder das Reinigungssystem mindestens einen Aktor auf, welcher in Reaktion auf Steuersignale von der Steuervorrichtung eine Bewegung und/oder Positionierung von Elementen gemäß Ausführungsformen der hierin offenbarten Gegenstände bewirkt.

Die Steuervorrichtung weist gemäß einer Ausführungsform eine Speichervorrichtung zum Speichern eines Programmelementes gemäß Ausführungsformen der hierin offenbarten Gegenstände auf. Ferner weist die Steuervorrichtung gemäß einer Ausführungsform eine Prozessorvorrichtung auf, welche zur Ausführung des Programmelements (bzw. zur Ausführung von Instruktionen, die in dem Programmelement enthalten sind) ausgebildet ist.

Ein Aspekt der hierin offenbarten Gegenstände betrifft einen Reifen mit einer Innenoberfläche, die der gemäß Ausführungsformen der hierin offenbarten Gegenstände gereinigt ist.

Gemäß einer Ausführungsform wird ein Reifen mit einer Innenoberfläche bereitgestellt, wobei die Innenoberfläche mittels einer Reifenreinigungsvorrichtung gemäß einer oder mehreren Ausführungsformen der hierin offenbarten Gegenstände gereinigt ist.

Gemäß einer Ausführungsform weist der Reifen einen Bearbeitungsweg auf, längs welchem die Innenoberfläche gereinigt ist.

Gemäß einer Ausführungsform definiert der Bearbeitungsweg in jedem Punkt (des Bearbeitungsweges) eine Wegrichtung entlang des Bearbeitungsweges, wobei die Wegrichtung einen ersten Richtungsanteil in der Umfangsrichtung und in einen zweiten Richtungsanteil parallel zu der Reifendrehachse aufweist. Gemäß einer Ausführungsform ist bei mindestens 70% des Bearbeitungsweges der erste Richtungsanteil größer ist als der zweite Richtungsanteil. Gemäß einer Ausführungsform ist bei mindestens 70 % des Bearbeitungsweges der erste Richtungsanteil mindestens doppelt so groß wie der zweite Richtungsanteil. Gemäß einer weiteren Ausführungsform ist bei mindestens 70 % des Bearbeitungsweges der erste Richtungsanteil mindestens dreimal so groß wie der zweite Richtungsanteil. Gemäß anderen Ausführungsformen gilt die obige Spezifizierung des ersten und des zweiten Richtungsanteils für mindestens 80 % des Bearbeitungsweges oder, gemäß einer weiteren Ausführungsform für 90 % des Bearbeitungsweges.

Gemäß einer Ausführungsform gelten die obigen Ausführungen zu der Wegrichtung des Positionierungsweges entsprechend.

Gemäß einer Ausführungsform weist der Bearbeitungsweg eine Vielzahl von Bearbeitungsspots aufweist, wobei benachbarte Bearbeitungsspots einander überlappen. Gemäß einer weiteren Ausführungsform überlappen jeweils zwei benachbarte Bearbeitungsspots entlang einer ersten Richtung über eine Länge, die 0 %, 50 %, 67 %, 75 %, 80 % oder 90 % der Ausdehnung von einem der Bearbeitungsspots in der ersten Richtung ist.

Gemäß einer Ausführungsform verläuft der Bearbeitungsweg mindestens abschnittsweise in parallelen Kreisbahnen und/oder der Bearbeitungsweg verläuft mindestens abschnittsweise helixförmig.

Gemäß einer Ausführungsform ist der Bearbeitungsspot ein rechteckiger Bearbeitungsspot. Gemäß einer weiteren Ausführungsform bildet bei mindestens 90 % des Bearbeitungsweges die Wegrichtung mit einer Seite des rechteckigen Bearbeitungsspots einen Winkel zwischen 80° und 100°, insbesondere einen Winkel von 90°. Gemäß einer weiteren Ausführungsform weist der rechteckige Bearbeitungsspot eine längere Seite und eine kürzere Seite auf und die Wegrichtung bildet mit der längeren Seite des rechteckigen Bearbeitungsspots einen Winkel zwischen 80° und 100°, insbesondere einen Winkel von 90°.

Gemäß einer Ausführungsform sind Bearbeitungsspots, die in Richtung der Reifendrehachse benachbart sind, in der Reifenumfangsrichtung um mehr als 10 % ihrer Ausdehnung in Umfangsrichtung gegeneinander verschoben. Gemäß einer weiteren Ausführungsform ist die Verschiebung in Umfangsrichtung mindestens 15 % (oder in nochmals anderer Ausführungsform, mindestens 20 %) der Ausdehnung der Bearbeitungsspots in der Umfangsrichtung.

### DETAILLIERTE BESCHREIBUNG

Nachfolgend werden exemplarische Ausführungsformen der hierin offenbarten Gegenstände mit Bezug auf die Zeichnungen beschrieben. Es wird angemerkt, dass in verschiedenen Figuren ähnliche oder identische Elemente oder Komponenten teilweise mit denselben Bezugszahlen versehen sind, oder mit Bezugszahlen, die sich nur in der ersten Ziffer und/oder einer angehängten Ziffer unterscheiden. Merkmale bzw. Komponenten, die mit den entsprechenden Merkmalen bzw. Komponenten in einer anderen Figur gleich oder zumindest funktionsgleich sind, werden nur bei ihrem ersten Auftreten in dem nachfolgenden Text detailliert beschrieben und die Beschreibung wird bei nachfolgendem Auftreten dieser Merkmale und Komponenten (bzw. der entsprechenden Bezugszahlen) nicht wiederholt. Die vorstehenden Definitionen gelten gemäß einer Ausführungsform für die nachfolgenden Ausführungsformen, und umgekehrt. Ferner sind die vorstehend beschriebenen Merkmale und Ausführungsformen mit den nachfolgend beschriebenen Merkmalen und Ausführungsformen kombinierbar.

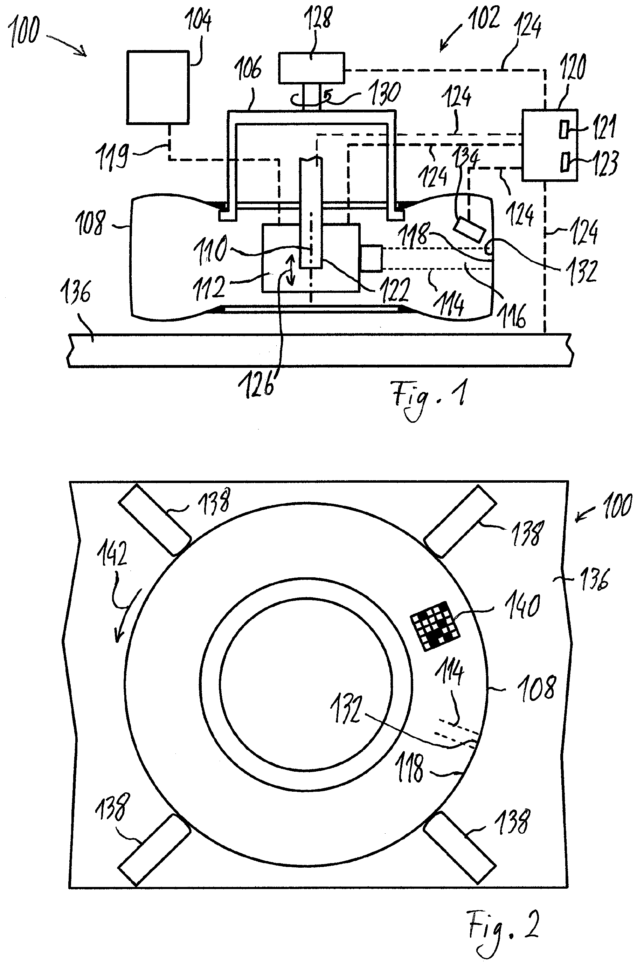

Fig. 1 zeigt schematisch ein Reifenreinigungssystem 100 gemäß Ausführungsformen der hierin offenbarten Gegenstände.

Gemäß einer Ausführungsform weist das Reifenreinigungssystem 100 eine Reifenreinigungsvorrichtung 102 und eine Laserquelle 104 auf. Die Reifenreinigungsvorrichtung 102 weist eine Positioniervorrichtung 106 auf, welche konfiguriert ist zum Positionieren eines Reifens 108. Der Reifen 108 definiert eine Reifendrehachse 110. Die Reifenreinigungsvorrichtung 102 weist ferner einen Reinigungskopf 112 auf, welcher konfiguriert ist zur Positionierung eines Abstrahlweges 114 und Abgabe eines Laserstrahles 116 entlang des Abstrahlweges 114 auf eine Innenoberfläche 118 des Reifens 108. Hierzu ist der Reinigungskopf 112 mit der Laserquelle 104 optisch gekoppelt, angegeben bei 119.

Die Reifenreinigungsvorrichtung 102 weist ferner eine Steuervorrichtung 120 auf, welche konfiguriert ist, um den Abstrahlweg 114 und die Innenoberfläche 118 relativ zueinander zu bewegen. Hierzu kann die Steuervorrichtung 120 gemäß einer Ausführungsform mit einem ersten Aktor 122 steuerungsmäßig verbunden sein. Gemäß einer Ausführungsform ist der erste Aktor 122 eingerichtet, um in Reaktion auf Steuersignale 124 der Steuervorrichtung 120 den Reinigungskopf 112 in einer linearen Bewegung 126 parallel zu der Reifendrehachse 110 zu bewegen. Gemäß einer Ausführungsform ist die Steuervorrichtung 120 mit einem zweiten Aktor 128 steuerungsmäßig verbunden. Gemäß einer Ausführungsform ist der zweite Aktor 128 eingerichtet, um in Reaktion auf Steuersignale 124 der Steuervorrichtung 120 die Positioniervorrichtung 106 zusammen mit dem Reifen 108, welcher von der Positioniervorrichtung 106 gehalten ist, zu rotieren (angegeben bei 130). Gemäß einer Ausführungsform ist der Reinigungskopf oder Teile davon eingerichtet, um in Reaktion auf Steuersignale 124 der Steuervorrichtung 120 eine Funktionalität des Reinigungskopfes 112 (beispielsweise einen Shutter, ein optisches Element, etc.) zu steuern. Gemäß einer Ausführungsform ist die Laserquelle mit der Steuervorrichtung 120 steuerungsmäßig verbunden (in Fig. 1 nicht dargestellt), zum Steuern der Laserquelle 104 durch die Steuervorrichtung 120.

Gemäß einer Ausführungsform weist die Steuervorrichtung 120 eine Speichervorrichtung 121 zum Speichern eines Programmelementes gemäß Ausführungsformen der hierin offenbarten Gegenstände auf. Ferner weist die Steuervorrichtung 120 gemäß einer Ausführungsform eine Prozessorvorrichtung 123 auf, welche zur Ausführung des Programmelements (bzw. zur Ausführung von Instruktionen, die in dem Programmelement enthalten sind) ausgebildet ist.

Der Abstrahlweg 114 und die Innenoberfläche 118 definieren einen Schnittpunkt 132 des Abstrahlweges 114 mit der Innenoberfläche 118.

Gemäß einer Ausführungsform weist die Reinigungsvorrichtung 102 eine Absaugvorrichtung 134 auf zum Absaugen von Verunreinigungen, die durch die Beaufschlagung der Innenoberfläche 118 mit dem Laserstrahl 116 entstehen (d. h. zum Absaugen von Verunreinigungen, die durch die Reinigung der Innenoberfläche 118 entstehen). Gemäß einer Ausführungsform ist die Absaugvorrichtung 134 von der Steuervorrichtung 120 über Steuersignale 124 gesteuert. Gemäß einer Ausführungsform kann die Absaugvorrichtung 134 mechanisch mit dem Reinigungskopf 112 verbunden sein (beispielsweise an diesem befestigt sein), so dass sich die Absaugvorrichtung 134 mit dem Reinigungskopf 112 bewegt.

Gemäß einer Ausführungsform weist das Reifenreinigungssystem 100 eine Transportvorrichtung 136 auf, welche beispielsweise ein Förderband, zum Transportieren des Reifens zu der Positioniervorrichtung 106. Gemäß einer Ausführungsform ist die Transportvorrichtung 136 über Steuersignale 124 von der Steuervorrichtung 120 gesteuert.

Fig. 2 zeigt einen Teil des Reifenreinigungssystems 100 aus Fig. 1 in einer Draufsicht.

Gemäß einer Ausführungsform kann eine Zentriervorrichtung 138 vorgesehen sein, welche den Reifen 108 auf der Transportvorrichtung 136 in eine definierte Position bringt (beispielsweise zentriert), in welcher der Reifen 108 von der Positioniervorrichtung 106 (in Fig. 2 nicht dargestellt) aufnehmbar (beispielsweise greifbar) ist.

Der Reifen 108 kann gemäß einer Ausführungsform Angaben 140 enthalten, welche von der Steuervorrichtung auslesbar sind (beispielsweise mittels eines geeigneten Lesegeräts). Gemäß einer Ausführungsform ist die Steuervorrichtung eingerichtet, um abhängig von den Angaben 140 Steuersignale abzugeben (beispielsweise die mit Bezug auf Fig. 1 beschriebenen Steuersignale 124), um Komponenten des Reifenreinigungssystems 100 zu steuern. Gemäß einer Ausführungsform können die Angaben 140 in digitaler Form vorliegen, beispielsweise in Form eines Matrixcodes wie beispielsweise eines QR-Codes oder eines Data-Matrixcodes.

Der Reifen 108 definiert eine Umfangsrichtung 142, beispielsweise wie in Fig. 2 dargestellt. Gemäß einer Ausführungsform wird durch die Rotation 130 des Reifens 108 und/oder die lineare Bewegung 126 des Bearbeitungskopfes 112 der Abstrahlweg 114 und die Innenoberfläche 118 relativ zueinander bewegt (siehe auch Fig. 1). Gemäß Ausführungsformen der hierin offenbarten Gegenstände definiert die Relativbewegung von Abstrahlweg 114 und Innenoberfläche 118 einen Positionierungsweg (in Fig. 2 nicht dargestellt) über die Innenoberfläche 118 sowie eine Geschwindigkeit des Schnittpunkts 132 bezüglich der Innenoberfläche 118 entlang des Positionierungsweges.

Gemäß einer Ausführungsform beträgt entlang des Positionierungsweges (d. h. bezüglich der Innenoberfläche 118) die mittlere Geschwindigkeit des Schnittpunktes in der Umfangsrichtung 142 mehr als 5 m/s.

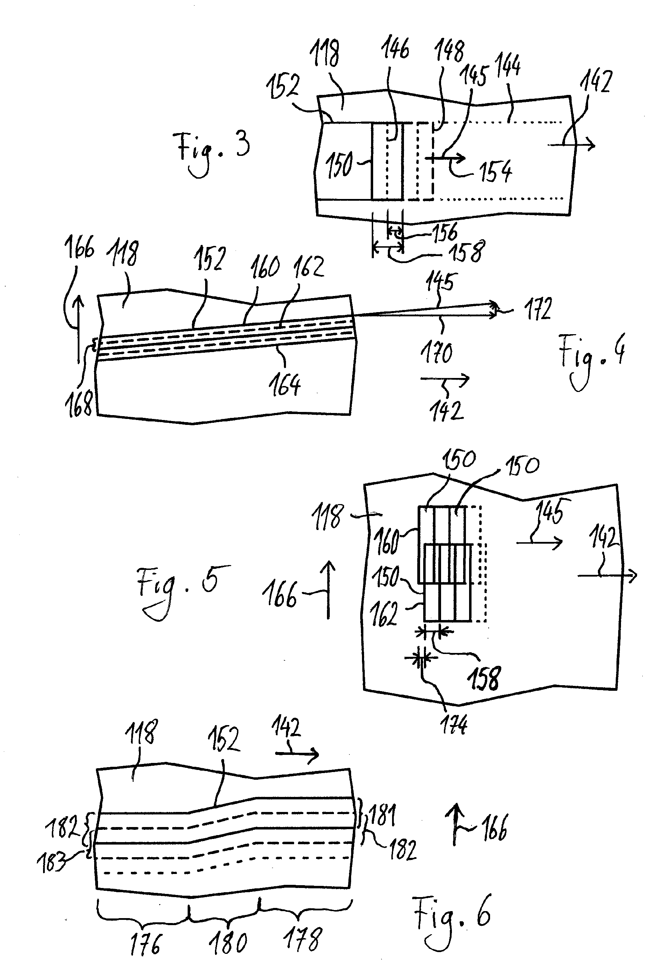

Fig. 3 zeigt eine Innenoberfläche 118 eines Reifens gemäß Ausführungsformen der hierin offenbarten Gegenstände.

Gemäß einer Ausführungsform erzeugt der Laserstrahl 116 (in Fig. 3 nicht dargestellt) auf dem Positionierungsweg 144 eine Vielzahl von Laserspots, von welchen in Fig. 3 exemplarisch ein erster Laserspot 146 und ein zweiter Laserspot 148 dargestellt sind. Es versteht sich, dass die Laserspots 146 und 148 gemäß einer Ausführungsform nicht gleichzeitig, sondern zeitlich nacheinander erzeugt werden, beispielsweise durch einzelne Pulse eines gepulsten Lasers. Gemäß einer Ausführungsform definiert der Positionierungsweges 144 in jedem Punkt des Positionierungsweges eine Wegrichtung 145 entlang des Positionierungsweges 144.

Gemäß einer Ausführungsform erzeugt jeder Laserspot auf der Innenoberfläche 118 einen Bearbeitungsspot 150, d. h. einen Bereich der Innenoberfläche 118, in welchem die Innenoberfläche 118 gereinigt ist. Somit versteht es sich, dass die Laserspots, beispielsweise die Laserspots 146 und 148 nur für eine bestimmte Zeitdauer (beispielsweise für die Pulsdauer des Laserstrahles) existieren, während die Bearbeitungsspots (beispielsweise der Bearbeitungsspots 150) dauerhaft auf der Innenoberfläche 118 erzeugt sind. Die Bearbeitungsspots, von denen in Fig. 3 der Bearbeitungsspots 150 dargestellt ist, definieren auf der Innenoberfläche 118 des Reifens einen Bearbeitungsweg 152, längs welchem die Innenoberfläche 118 gereinigt ist.

Gemäß einer Ausführungsform erzeugt der Laserstrahl auf dem Positionierungsweges 144 eine Vielzahl von Laserspots, insbesondere die Laserspots 146 und 148, wie beispielhaft in Fig. 3 dargestellt, wobei gemäß einer Ausführungsform benachbarte Laserspots 146, 148 einander überlappen, beispielsweise wie in Fig. 3 dargestellt. Gemäß einer Ausführungsform überlappen zwei benachbarte Laserspots 146, 148 entlang einer ersten Richtung 154 über eine Länge 156, die gemäß einer Ausführungsform 50 % der Ausdehnung 158 von einem der Laserspots in der ersten Richtung 154 ist, beispielsweise wie in Fig. 3 dargestellt. Gemäß einer Ausführungsform ist die erste Richtung 155 parallel zu der Wegrichtung 145. Gemäß einer Ausführungsform verläuft der Positionierungsweg 144 bzw. der Bearbeitungsweg 152 zumindest abschnittsweise parallel zu der Umfangsrichtung 142, beispielsweise wie in Fig. 3 dargestellt.

Gemäß einer Ausführungsform ist der Laserspot 146, 148 ein rechteckiger Laserspot, beispielsweise wie in Fig. 3 dargestellt. Entsprechend ist auch der Bearbeitungsspot 150 gemäß einer Ausführungsform ein rechteckiger Bearbeitungsspot.

Fig. 4 zeigt eine weitere Innenoberfläche 118 eines Reifens gemäß Ausführungsformen der hierin offenbarten Gegenstände.

Gemäß einer Ausführungsform verläuft ein Bearbeitungsweg 152 mindestens abschnittsweise helixförmig, beispielsweise wie in Fig. 4 dargestellt. Fig. 4 zeigt drei Bearbeitungswegabschnitte 160, 162 und 164, die in Richtung 166 der Reifendrehachse (110, siehe Fig. 1) überlappen. Hierbei sind die Bearbeitungswegabschnitte 160, 164 in durchgezogenen Linien und der Bearbeitungswegabschnitt 162 in gestrichelten Linien dargestellt, um die Unterscheidbarkeit zu erleichtern. Gemäß einer Ausführungsform beträgt die Überlappung in Richtung 166 der Reifendrehachse 50 % der Ausdehnung 168 des Bearbeitungsweges 152 in Richtung 166 der Reifendrehachse, beispielsweise wie in Fig. 4 dargestellt. Gemäß einer Ausführungsform kann diese Überlappung 67 % oder 75 % betragen (in Fig. 4 nicht dargestellt). In diesen Ausführungsformen ist die Richtung 166 der Reifendrehachse somit die erste Richtung gemäß einigen Ausführungsformen.

Gemäß einer Ausführungsform weist die Wegrichtung 145 in jedem Punkt des Positionierungsweges bzw. des Bearbeitungsweges einen ersten Richtungsanteil 170 in Umfangsrichtung 142 und einen zweiten Richtungsanteil 172 parallel zu der Reifendrehachse 110 (d. h. in Richtung 166 der Reifendrehachse) auf. Gemäß einer Ausführungsform ist bei mindestens 70 % des Positionierungsweges der erste Richtungsanteil 170 größer als der zweite Richtungsanteil 172, beispielsweise wie in Fig. 4 dargestellt.

Fig. 5 zeigt eine weitere Innenoberfläche 118 eines Reifens gemäß Ausführungsformen der hierin offenbarten Gegenstände.

Gemäß einer Ausführungsform zeigt die Innenoberfläche 118 einen ersten Bearbeitungswegabschnitt 160 und einen zweiten Bearbeitungswegabschnitt 162, die in Richtung 166 der Reifendrehachse überlappen, beispielsweise wie in Fig. 5 dargestellt. Die Bearbeitungswegabschnitte 160, 162 weisen jeweils eine Vielzahl von Bearbeitungsspots auf, von denen einige in Fig. 5 mit 150 gekennzeichnet sind. Die gestrichelten Linien in Fig. 5 deuten an, dass die Reihe der Bearbeitungsspots in Wegrichtung 145 fortgesetzt ist.

Die Bearbeitungsspots haben in der Umfangsrichtung 142 eine Ausdehnung, die in Fig. 5 bei 158 angegeben ist. Gemäß einer Ausführungsform sind in Richtung 166 der Reifendrehachse benachbarte Bearbeitungsspots 150 (d. h. Bearbeitungsspots 150 des ersten Bearbeitungswegabschnitts 160 und Bearbeitungsspots 150 des zweiten Bearbeitungswegabschnitts 162) in Umfangsrichtung 142 um einen Verschiebungsweg 174 gegeneinander verschoben, beispielsweise wie in Fig. 5 dargestellt. Gemäß einer Ausführungsform beträgt der Verschiebungsweg 174 mehr als 10 % der Ausdehnung 158 der Bearbeitungsspots in Umfangsrichtung, beispielsweise wie in Fig. 5 dargestellt. Gemäß einer weiteren Ausführungsform beträgt der Verschiebungsweg 174 mehr als 15 % oder, in einer nochmals weiteren Ausführungsform, mehr als 20 % der Ausdehnung 158.

Gemäß einer Ausführungsform überlappen die Bearbeitungsspots 150 in der Umfangsrichtung 142 nicht, beispielsweise wie in Fig. 5 dargestellt. Beispielsweise können die Bearbeitungsspots 150 in der Umfangsrichtung 142 unmittelbar aneinander angrenzen (Überlapp 0 %). Eine lückenlose Reinigung wird in diesem Fall insbesondere durch die Überlappung der Bearbeitungsspots in Richtung 166 der Reifendrehachse sichergestellt. Gemäß einer weiteren Ausführungsform (in Fig. 5 nicht dargestellt) überlappen die Bearbeitungsspots 150 sowohl in der Umfangsrichtung 142 als auch in Richtung 166 der Reifendrehachse.

Fig. 6 zeigt eine weitere Innenoberfläche 118 eines Reifens gemäß Ausführungsformen der hierin offenbarten Gegenstände.

Gemäß einer Ausführungsform definieren mehrere zeitlich aufeinanderfolgende Bearbeitungsspots (in Fig. 6 nicht dargestellt) auf der Innenoberfläche 118 einen Bearbeitungsweg, längs welchem die Innenoberfläche 118 gereinigt ist. Gemäß einer Ausführungsform verläuft der Bearbeitungsweg 152 mindestens abschnittsweise in parallelen Kreisbahnen, wie beispielsweise in den Winkelbereichen (Segmenten) 176 und 178 in Fig. 6. Gemäß einer weiteren Ausführungsform verläuft der Bearbeitungsweg 152 mindestens abschnittsweise helixförmig, wie beispielsweise in dem Winkelbereich 180 in Fig. 6.

Gemäß einer Ausführungsform weist der Bearbeitungsweg 152 verschiedene Bearbeitungswegabschnitte 181, 182, 183 auf, die in Richtung 166 der Reifendrehachse auf verschiedenen Ebenen verlaufen. Ein Übergang zwischen diesen Ebenen (d.h. eine Überbrückung eines Gangunterschieds) erfolgt gemäß einer Ausführungsform in einem Winkelbereich, der hierin auch als Querabschnitt bezeichnet wird, beispielsweise in dem Winkelbereich 180 in Fig. 6. Der Winkelbereich 180 erstreckt sich in der Umfangsrichtung 142 gemäß einer Ausführungsform über mindestens 10 Grad, beispielsweise wie in Fig. 6 dargestellt.

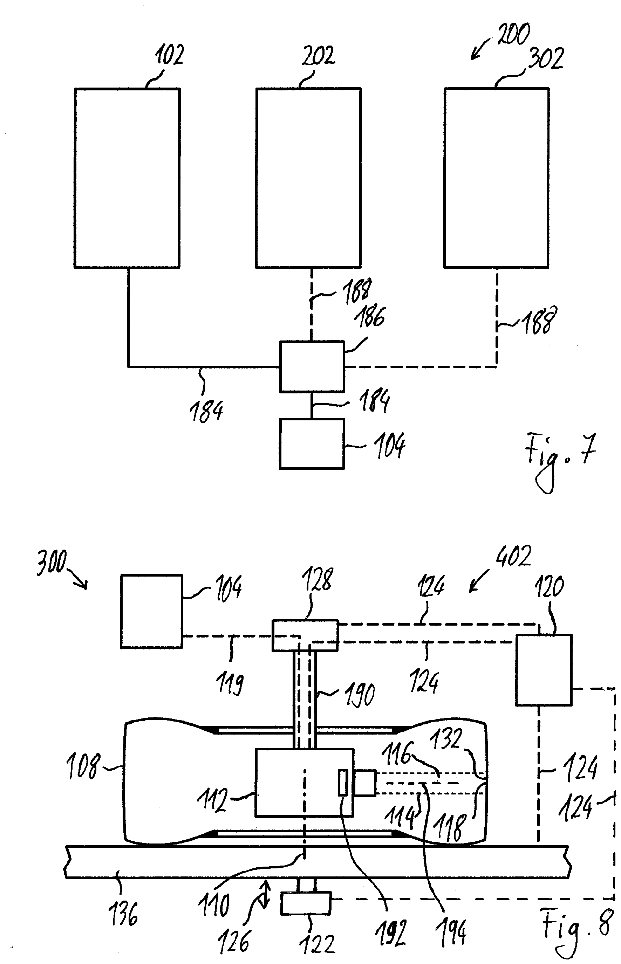

Fig. 7 zeigt ein Reifenreinigungssystem 200 gemäß Ausführungsformen der hierin offenbarten Gegenstände.

Das Reifenreinigungssystem 200 weist gemäß einer Ausführungsform eine Reifenreinigungsvorrichtung 102 sowie mindestens eine weitere Reifenreinigungsvorrichtung, beispielsweise zwei weitere Reifenreinigungsvorrichtungen 202, 302 auf, beispielsweise wie in Fig. 7 dargestellt. Mindestens zwei Reifenreinigungsvorrichtungen 102, 202, 302 des Reifenreinigungssystems 200 ist gemäß einer Ausführungsform eine einzige Laserquelle 104 zum Erzeugen eines Laserstrahles zugeordnet. Zur Erzeugung des Laserstrahles entlang des Abstrahlweges (in Fig. 7 nicht dargestellt) wird Laserstrahlung 184 von der Laserquelle 104 einer Umschaltvorrichtung 186 zugeführt, welche die Laserstrahlung 184 selektiv an eine der Reifenreinigungsvorrichtungen 102, 202, 303 weiterleitet, beispielsweise an die Reifenreinigungsvorrichtung 102, beispielsweise wie in Fig. 7 dargestellt.

Das selektive Weiterleiten der Laserstrahlung 184 an die weiteren Reifenreinigungsvorrichtungen 202, 302 sind in Fig. 7 durch gestrichelte Linien 188 dargestellt. Gemäß einer Ausführungsform ist die Umschaltvorrichtung 186 und/oder die Laserquelle 104 durch Steuersignale von einer Steuervorrichtung gemäß Ausführungsformen der hierein offenbarten Gegenstände (beispielsweise einer Steuervorrichtung 120, wie sie mit Bezug auf Fig. 1 offenbart ist) gesteuert.

Fig. 8 zeigt ein weiteres Reifenreinigungssystem 300 gemäß Ausführungsformen der hierin offenbarten Gegenstände.

Das Reifenreinigungssystem 300 ist bis auf einige Änderungen, die nachfolgend beschrieben werden, analog zu dem Reifenreinigungssystem 100 aus Fig. 1 aufgebaut. Die Beschreibung der entsprechenden Merkmale, die mit Bezug auf Fig. 1 beschriebenen und in Fig. 8 dargestellt sind, wird mit Bezug auf Fig. 8 nicht wiederholt.

Gemäß einer Ausführungsform weist das Reifenreinigungssystem 300 eine Reifenreinigungsvorrichtung 402 auf, mit einer Steuervorrichtung 120, welche konfiguriert ist, um den Abstrahlweg 114 und die Innenoberfläche 118 relativ zueinander zu bewegen. Hierzu ist gemäß einer Ausführungsform die Steuervorrichtung mit einem ersten Aktor 122 steuerungsmäßig verbunden. Gemäß einer Ausführungsform ist der erste Aktor 122 eingerichtet, um in Reaktion auf Steuersignale 124 der Steuervorrichtung 120 die Transportvorrichtung 136 in einer linearen Bewegung 126 parallel zu der Reifendrehachse 110 zu bewegen. Die Transportvorrichtung 136 bildet gemäß einer Ausführungsform mindestens einen Teil einer Positioniervorrichtung gemäß Ausführungsformen der hierin offenbarten Gegenstände.

Gemäß einer Ausführungsform ist der Reinigungskopf 112 konfiguriert zum Rotieren des Abstrahlweges 114. Beispielsweise kann gemäß einer Ausführungsform der Reinigungskopf 112 selbst rotierbar sein, beispielsweise mittels eines zweiten Aktors 128, der mit der Steuervorrichtung 120 steuerungsmäßig verbunden ist, beispielsweise wie in Fig. 7 dargestellt. Gemäß einer Ausführungsform ist der zweite Aktor 128 eingerichtet, um in Reaktion auf Steuersignale 124 der Steuervorrichtung 120 den Reinigungskopf 112 zu rotieren, insbesondere um die Reifendrehachse 110. Gemäß einer Ausführungsform erfolgt die optische Kopplung 119 der Laserquelle 104 mit dem Reinigungskopf 112 sowie die steuerungsmäßige Verbindung der Steuervorrichtung 120 mit dem Reinigungskopf 112 entlang eines Drehmomentübertragungsteils 190, beispielsweise einer Welle, mit welcher der Reinigungskopf 112 rotierbar mit dem zweiten Aktor 128 verbunden ist. Gemäß einer Ausführungsform ist die Steuervorrichtung 120 konfiguriert, um die Relativbewegung des Schnittpunkts 132 mindestens teilweise durch ein Rotieren des Abstrahlweges 114, insbesondere ein Rotieren des Abstrahlweges 114 um die Reifendrehachse 110, zu bewirken.

Gemäß einer Ausführungsform weist die Reifenreinigungsvorrichtung 402 ein Kompensationselement 192 auf, welches eingerichtet ist, um eine Rotation des Laserstrahles 116 um seine Mittelachse 194, die durch die Rotation des Abstrahlweges 114 um die Reifendrehachse 110 erzeugt ist, zu kompensieren. Beispielsweise würde gemäß einer Ausführungsform der Laserstrahl 116 ohne Kompensationselement 192 um seine Mittelachse 194 rotieren. Dadurch würde ein Laserspot bei einer Rotation des Abstrahlweges 114 (und damit bei einer Rotation des Laserstrahles 116 um die Reifendrehachse 110) der Laserspot zusätzlich auch um seine Mittelachse 194 rotieren.

Gemäß einer Ausführungsform ist das Kompensationselement 192 ein Dove-Prisma.

Es sollte angemerkt werden, dass hierin offenbarte Elemente (wie beispielsweise eine Steuervorrichtung, eine Positioniervorrichtung, eine Transportvorrichtung, ein Aktor, etc. nicht auf die dezidierten Entitäten beschränkt sind, wie sie in einigen Ausführungsformen beschrieben sind. Vielmehr können die hierin offenbarten Gegenstände auf verschiedene Weisen implementiert werden, während sie immer noch die offenbarte spezifische Funktionalität liefern.

Es wird darauf hingewiesen, dass jede hierin offenbarte Entität (beispielsweise Vorrichtung, Element, Merkmal und Verfahrensschritt) nicht auf eine dezidierte Entität beschränkt ist, wie sie in einigen Ausführungsformen beschrieben ist. Vielmehr können die hierin beschriebenen Gegenstände auf verschiedene Weisen mit verschiedener Granularität auf Vorrichtungs-Niveau, auf Verfahrens-Niveau, oder auf Software-Niveau bereitgestellt sein, während sie immer noch die angegebene Funktionalität liefern. Ferner sollte angemerkt werden, dass gemäß Ausführungsformen eine separate Entität für jede der hierin offenbarten Funktionen bereitgestellt sein kann. Gemäß anderer Ausführungsformen kann eine Entität konfiguriert sein, um zwei oder mehr Funktionen, wie sie hierin beschrieben sind, zu liefern. Gemäß nochmals anderen Ausführungsformen können zwei oder mehr Entitäten konfiguriert sein, um zusammen eine Funktion, wie sie hierin beschrieben ist, zu liefern.

Es wird darauf hingewiesen, dass die hier beschriebenen Implementierungen in den Zeichnungen lediglich eine beschränkte Auswahl an möglichen Ausführungsvarianten der hierin offenbarten Gegenstände darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offenbart anzusehen sind. Ferner sollte erwähnt werden, dass Begriffe wie "ein" oder "eines" eine Mehrzahl nicht ausschließen. Begriffe wie "enthaltend" oder "aufweisend" schließen weitere Merkmale oder Verfahrensschritte nicht aus. Die Begriffe "aufweisend" oder "enthaltend" umfassen jeweils die beiden Bedeutungen "unter anderem aufweisend" und "bestehend aus".

Ferner sollte angemerkt werden, dass, während die exemplarischen Reifenreinigungssysteme, Reifenreinigungsvorrichtungen und Reifen in den Zeichnungen eine bestimmte Kombination von mehreren Ausführungsformen der hierin offenbarten Gegenstände zeigt, jede andere Kombination von Ausführungsformen ebenso möglich und mit dieser Anmeldung als offenbart anzusehen ist.

Eine vorteilhafte Kombination von Ausführungsformen der hierin offenbarten Gegenstände lässt sich wie folgt zusammenfassen:
Eine Reifenreinigungsvorrichtung zur Reinigung einer Innenoberfläche eines Reifens mittels Laserstrahlung weist auf: eine Positioniervorrichtung, welche konfiguriert ist zum Positionieren eines Reifens, welcher eine Innenoberfläche aufweist und welcher eine Umfangsrichtung und eine Reifendrehachse definiert; einen Reinigungskopf, welcher konfiguriert ist zur Positionierung eines Abstrahlweges und Abgabe eines Laserstrahls entlang des Abstrahlweges auf die Innenoberfläche des Reifens; eine Steuervorrichtung, welche konfiguriert ist, um den Abstrahlweg und die Innenoberfläche relativ zueinander zu bewegen; wobei eine Relativbewegung eines Schnittpunktes des Abstrahlweges mit der Innenoberfläche einen Positionierungsweg über die Innenoberfläche des Reifens sowie eine Geschwindigkeit entlang des Positionierungsweges definiert; wobei entlang des Positionierungsweges die mittlere Geschwindigkeit des Schnittpunktes in der Umfangsrichtung mehr als 5 m/s beträgt.

## Patentansprüche

1. Reifenreinigungsvorrichtung (102, 202, 302) zur Reinigung einer Innenoberfläche (118) eines Reifens (108) mittels Laserstrahlung, die Reifenreinigungsvorrichtung (102, 202, 302) aufweisend:
eine Positioniervorrichtung (106, 128, 136, 138), welche konfiguriert ist zum Positionieren eines Reifens (108), welcher eine Innenoberfläche (118) aufweist und welcher eine Umfangsrichtung (142) und eine Reifendrehachse (110) definiert;
einen Reinigungskopf (112), welcher konfiguriert ist zur Positionierung eines Abstrahlweges (114) und Abgabe eines Laserstrahls (116) entlang des Abstrahlweges (114) auf die Innenoberfläche (118) des Reifens (108);
eine Steuervorrichtung (120), welche konfiguriert ist, um den Abstrahlweg (114) und die Innenoberfläche (118) relativ zueinander zu bewegen;
wobei eine Relativbewegung eines Schnittpunktes (132) des Abstrahlweges (114) mit der Innenoberfläche (118) einen Positionierungsweg (144) über die Innenoberfläche (118) des Reifens (108) sowie eine Geschwindigkeit entlang des Positionierungsweges (144) definiert;
wobei der Positionierungsweg (144) in jedem Punkt eine Wegrichtung (145) entlang des Positionierungsweges (144) definiert, wobei die Wegrichtung (145) einen ersten Richtungsanteil (170) in der Umfangsrichtung (142) und in einen zweiten Richtungsanteil (172) parallel zu der Reifendrehachse (110) aufweist,
**dadurch gekennzeichnet, dass** bei mindestens 70% des Positionierungsweges (144) der erste Richtungsanteil (170) größer ist als der zweite Richtungsanteil (172).

2. Reifenreinigungsvorrichtung (102, 202, 302) nach Anspruch 1,
wobei die Relativbewegung zu mindestens 50 % durch Rotation von mindestens einem rotierbaren Element erzeugt ist, insbesondere wobei das mindestens eine rotierbare Element mindestens eines der folgenden Elemente umfasst: den Reifen (108), den Abstrahlweg (114), ein optisches Element;
und/oder
wobei entlang des Positionierungsweges (144) die mittlere Geschwindigkeit des Schnittpunktes (132) in der Umfangsrichtung (142) mehr als 5 m/s beträgt.

3. Reifenreinigungsvorrichtung (102, 202, 302) nach irgendeinem der vorhergehenden Ansprüche,
wobei der Laserstrahl (116) auf dem Positionierungsweges (144) eine Vielzahl von Laserspots (146, 148) erzeugt;
wobei jeder Laserspot (146, 148) der Vielzahl von Laserspots (146, 148) auf der Innenoberfläche (118) je einen Bearbeitungsspot erzeugt;
wobei mehrere aufeinanderfolgende Bearbeitungsspots (150) auf der Innenoberfläche (118) des Reifens (108) einen Bearbeitungsweg (152) definieren, längs welchem die Innenoberfläche (118) gereinigt ist; und wobei
der Bearbeitungsweg (152) mindestens abschnittsweise in parallelen Kreisbahnen verläuft; und/oder
der Bearbeitungsweg (152) mindestens abschnittsweise helixförmig verläuft.

4. Reifenreinigungsvorrichtung (102, 202, 302) nach irgendeinem der vorhergehenden Ansprüche,
wobei der Laserstrahl (116) auf dem Positionierungsweg (144) eine Vielzahl von Laserspots (146, 148) erzeugt und wobei benachbarte Laserspots (146, 148) einander überlappen; und wobei insbesondere zwei benachbarte Laserspots (146, 148) entlang einer ersten Richtung über eine Länge überlappen, die 0 %, 10 %, 50 %, 67 %, 75 %, 80 % oder 90 % der Ausdehnung von einem der Laserspots (146, 148) in der ersten Richtung ist.

5. Reifenreinigungsvorrichtung (102, 202, 302) nach irgendeinem der vorhergehenden Ansprüche,
wobei die Positioniervorrichtung (106, 128, 136, 138) konfiguriert ist zum Rotieren des Reifens (108) und wobei die Steuervorrichtung (120) konfiguriert ist, um die Relativbewegung des Schnittpunktes (132) mindestens teilweise durch das Rotieren des Reifens (108) um seine Drehachse zu bewirken;
und/oder
wobei der Reinigungskopf (112) konfiguriert ist zum Rotieren des Abstrahlweges (114) und die Steuervorrichtung (120) konfiguriert ist, um die Relativbewegung des Schnittpunktes (132) mindestens teilweise durch ein Rotieren des Abstrahlweges (114), insbesondere durch ein Rotieren des Abstrahlweges (114) um die Reifendrehachse (110), zu bewirken.

6. Reifenreinigungsvorrichtung (102, 202, 302) mit den Merkmalen von irgendeinem der Ansprüche 2 oder 5, wobei die Relativbewegung des Schnittpunktes (132) zu mehr als 90% durch das Rotieren des Reifens (108) und/oder durch das Rotieren des Abstrahlweges (114) erfolgt.

7. Reifenreinigungsvorrichtung (102, 202, 302) nach irgendeinem der Ansprüche 2, 5 oder 6, ferner aufweisend ein Kompensationselement (192), welches eine Rotation des Laserstrahls (116) um seine Mittelachse (194), die durch die Rotation des Abstrahlweges (114) erzeugt ist, kompensiert.

8. Reifenreinigungsvorrichtung (102, 202, 302) nach irgendeinem der Ansprüche 3 bis 7, wobei der Laserspot (146, 148) ein rechteckiger Laserspot (146, 148) ist und wobei bei mindestens 70% des Positionierungsweges (144) die Wegrichtung (145) mit einer Seite des rechteckigen Laserspots (146, 148) einen Winkel zwischen 80° und 100°, insbesondere einen Winkel von 90°, bildet, insbesondere wobei der rechteckige Laserspot (146, 148) eine längere Seite und eine kürzere Seite aufweist und die Wegrichtung (145) mit der längeren Seite des rechteckigen Laserspots (146, 148) einen Winkel zwischen 80° und 100°, insbesondere einen Winkel von 90°, bildet.

9. Reifenreinigungssystem aufweisend:
eine Reifenreinigungsvorrichtung (102, 202, 302) nach irgendeinem der Ansprüche 1 bis 8; und
eine Laserquelle (104) zum Erzeugen des Laserstrahles (116); insbesondere ferner aufweisend
eine weitere Reifenreinigungsvorrichtung (202, 302) nach irgendeinem der Ansprüche 1 bis 8; und
eine Umschaltvorrichtung (186), mittels welcher der Laserstrahl (116) alternativ der Reifenreinigungsvorrichtung (102) oder der weiteren Reifenreinigungsvorrichtung (202, 302) zuführbar ist.

10. Reifen (108) mit einer Innenoberfläche (118), wobei die Innenoberfläche (118) mittels einer Reifenreinigungsvorrichtung (102, 202, 302) gemäß irgendeinem der Ansprüche 1 bis 8 gereinigt ist;
ferner aufweisend
einen Bearbeitungsweg (152), längs welchem die Innenoberfläche (118) gereinigt ist;
wobei
der Bearbeitungsweg (152) in jedem Punkt eine Wegrichtung (145) entlang des Bearbeitungsweges (152) definiert, wobei die Wegrichtung (145) einen ersten Richtungsanteil (170) in der Umfangsrichtung (142) und in einen zweiten Richtungsanteil (172) parallel zu der Reifendrehachse (110) aufweist; und
bei mindestens 70% des Bearbeitungsweges (152) der erste Richtungsanteil (170) größer ist als der zweite Richtungsanteil (172).

11. Reifen (108) nach Anspruch 10, wobei der Bearbeitungsweg (152) eine Vielzahl von Bearbeitungsspots (150) aufweist, wobei benachbarte Bearbeitungsspots (150) einander überlappen oder berühren; und wobei insbesondere jeweils zwei benachbarte Bearbeitungsspots (150) entlang einer ersten Richtung über eine Länge überlappen, die 0 %, 50 %, 67 %, 75 %, 80 % oder 90 % der Ausdehnung von einem der Bearbeitungsspots (150) in der ersten Richtung ist;
wobei insbesondere
der Bearbeitungsweg (152) mindestens abschnittsweise in parallelen Kreisbahnen verläuft;
und/oder
der Bearbeitungsweg (152) mindestens abschnittsweise helixförmig verläuft.

12. Reifen (108) nach Anspruch 11,
wobei der Bearbeitungsspot ein rechteckiger Bearbeitungsspot ist und wobei bei mindestens 90% des Bearbeitungsweges (152) die Wegrichtung (145) mit einer Seite des rechteckigen Bearbeitungsspots (150) einen Winkel zwischen 80° und 100°, insbesondere 90°, bildet, insbesondere wobei der rechteckige Bearbeitungsspot eine längere Seite und eine kürzere Seite aufweist und die Wegrichtung (145) mit der längeren Seite des rechteckigen Bearbeitungsspots (150) einen Winkel zwischen 80° und 100°, insbesondere 90°, bildet.

13. Reifen (108) nach irgendeinem der Ansprüche 11 oder 12, wobei Bearbeitungsspots (150), welche in Richtung der Reifendrehachse (110) benachbart sind, in der Umfangsrichtung (142) des Reifens (108) um mehr als 10 % ihrer Ausdehnung (158) in der Umfangsrichtung (142) gegeneinander verschoben sind.

14. Verfahren zum Reinigen eines Reifens (108), das Verfahren aufweisend:
Positionieren eines Reifens (108), welcher eine Innenoberfläche (118) aufweist und welcher eine Umfangsrichtung (142) und eine Reifendrehachse (110) definiert;
Positionierung eines Abstrahlweges (114) und Abgabe eines Laserstrahls (116) entlang des Abstrahlweges (114) auf die Innenoberfläche (118) des Reifens (108);
Bewegen des Abstrahlweges (114) und der Innenoberfläche (118) relativ zueinander;
wobei eine Relativbewegung eines Schnittpunktes des Abstrahlweges (114) mit der Innenoberfläche (118) einen Positionierungsweg (144) über die Innenoberfläche (118) des Reifens (108) sowie eine Geschwindigkeit entlang des Positionierungsweges (144) definiert; und
wobei der Positionierungsweg (144) in jedem Punkt eine Wegrichtung (145) entlang des Positionierungsweges (144) definiert, wobei die Wegrichtung (145) einen ersten Richtungsanteil (170) in der Umfangsrichtung (142) und in einen zweiten Richtungsanteil (172) parallel zu der Reifendrehachse (110) aufweist; und
wobei bei mindestens 70% des Positionierungsweges (144) der erste Richtungsanteil (170) größer ist als der zweite Richtungsanteil (172).

15. Computerprogrammprodukt aufweisend ein Programmelement, wobei das Computerprogrammprodukt eingerichtet ist um, wenn das Programmelement auf einer Prozessorvorrichtung ausgeführt wird, ein Verfahren gemäß Anspruch 14 auszuführen.

## Claims

1. A tire cleaning device (102, 202, 302) for cleaning an inner surface (118) of a tire (108) by means of laser radiation, the tire cleaning device (102, 202, 302) comprising:
a positioning device (106, 128, 136, 138) configured to position a tire (108) having an inner surface (118) and defining a circumferential direction (142) and a tire rotation axis (110);
a cleaning head (112) configured to position a beam path (114) and emit a laser beam (116) along the beam path (114) onto the inner surface (118) of the tire (108);
a control device (120) configured to move the beam path (114) and the inner surface (118) relative to each other;
wherein a relative movement of an intersection (132) of the beam path (114) and the inner surface (118) defines a positioning path (144) across the inner surface (118) of the tire (108) and a velocity along the positioning path (144) ;
wherein the positioning path (144) defines at each point a path direction (145) along the positioning path (144), the path direction (145) having a first directional portion (170) in the circumferential direction (142) and a second directional portion (172) parallel to the tire rotation axis (110),
**characterized in that**
for at least 70% of the positioning path (144), the first directional portion (170) is greater than the second directional portion (172).

2. The tire cleaning device (102, 202, 302) of claim 1,
wherein at least 50% of the relative motion is generated by rotation of at least one rotatable element, in particular wherein the at least one rotatable element comprises at least one of the following elements: the tire (108), the radiation path (114), an optical element;
and/or
wherein along the positioning path (144), the average velocity of the intersection (132) in the circumferential direction (142) is more than 5 m/s.

3. The tire cleaning device (102, 202, 302) according to any of the preceding claims,
wherein the laser beam (116) generates a plurality of laser spots (146, 148) along the positioning path (144);
wherein each laser spot (146, 148) of the plurality of laser spots (146, 148) on the inner surface (118) generates a respective processing spot;
wherein a plurality of successive processing spots (150) on the inner surface (118) of the tire (108) define a processing path (152) along which the inner surface (118) is cleaned; and wherein
the processing path (152) runs at least in sections in parallel circular paths;
and/or
the processing path (152) is helical at least in sections.

4. The tire cleaning device (102, 202, 302) according to any one of the preceding claims,
wherein the laser beam (116) generates a plurality of laser spots (146, 148) along the positioning path (144), and wherein adjacent laser spots (146, 148) overlap each other; and wherein, in particular, two adjacent laser spots (146, 148) overlap along a first direction over a length that is 0%, 10%, 50%, 67%, 75%, 80% or 90% of the extent of one of the laser spots (146, 148) in the first direction.

5. The tire cleaning device (102, 202, 302) according to any of the preceding claims,
wherein the positioning device (106, 128, 136, 138) is configured to rotate the tire (108), and wherein the control device (120) is configured to effect a relative movement of the intersection (132) at least in part by rotating the tire (108) about its axis of rotation;
and/or
wherein the cleaning head (112) is configured to rotate the beam path (114) and the control device (120) is configured to cause the relative movement of the intersection (132) at least in part by rotating the beam path (114), in particular by rotating the beam path (114) about the tire rotation axis (110).

6. The tire cleaning device (102, 202, 302) having the features of any of claims 2 or 5, wherein the relative movement of the intersection (132) is caused more than 90% by rotating the tire (108) and/or by rotating the beam path (114).

7. The tire cleaning device (102, 202, 302) according to any one of claims 2, 5 or 6, further comprising a compensating element (192) that compensates for a rotation of the laser beam (116) about its central axis (194) generated by the rotation of the beam path (114).

8. The tire cleaning device (102, 202, 302) according to any of claims 3 to 7, wherein the laser spot (146, 148) is a rectangular laser spot (146, 148), and wherein for at least 70% of the positioning path (144), the path direction (145) forms an angle between 80° and 100° with one side of the rectangular laser spot (146, 148), in particular an angle of 90°, in particular wherein the rectangular laser spot (146, 148) has a longer side and a shorter side and the path direction (145) forms with the longer side of the rectangular laser spot (146, 148) an angle between 80° and 100°, in particular an angle of 90°.

9. The tire cleaning system comprising:
a tire cleaning device (102, 202, 302) according to any one of claims 1 to 8; and
a laser source (104) for generating the laser beam (116);
particularly further comprising another tire cleaning device (202, 302) according to any one of claims 1 to 8; and
a switching device (186) by means of which the laser beam (116) can be alternatively supplied to the tire cleaning device (102) or to the further tire cleaning device (202, 302).

10. A tire (108) having an inner surface (118), wherein the inner surface (118) is cleaned by means of a tire cleaning device (102, 202, 302) according to any of claims 1 to 8;
further comprising a processing path (152) along which the inner surface (118) is cleaned;
the processing path (152) defining at each point a path direction (145) along the processing path (152), the path direction (145) having a first directional portion (170) in the circumferential direction (142) and a second directional portion (172) parallel to the tire rotation axis (110); and
for at least 70% of the processing path (152), the first directional portion (170) is greater than the second directional portion (172).

11. The tire (108) according to claim 10, wherein the processing path (152) comprises a plurality of processing spots (150), wherein adjacent processing spots (150) overlap or contact each other; and wherein
in particular, each two adjacent processing spots (150) overlap along a first direction over a length that is 0%, 50%, 67%, 75%, 80%, or 90% of the extent of one of the processing spots (150) in the first direction;
wherein in particular the processing path (152) runs at least in sections in parallel circular paths;
and/or
the processing path (152) is at least in sections helical.

12. The tire (108) according to claim 11,
wherein the processing spot is a rectangular processing spot and wherein, for at least 90% of the processing path (152), the path direction (145) forms an angle between 80° and 100°, in particular 90°, with one side of the rectangular processing spot (150), in particular wherein the rectangular processing spot has a longer side and a shorter side and the path direction (145) forms an angle between 80° and 100°, in particular 90°, with the longer side of the rectangular processing spot (150).

13. The tire (108) according to any of claims 11 or 12, wherein
processing spots (150), which are adjacent in the direction of the tire rotation axis (110), are displaced relative to one another in the circumferential direction (142) of the tire (108) by more than 10% of their extent (158) in the circumferential direction (142).

14. A method of cleaning a tire (108), the method comprising:
positioning a tire (108) that has an inner surface (118) and that defines a circumferential direction (142) and a tire rotation axis (110);
positioning a beam path (114) and emitting a laser beam (116) along the beam path (114) onto the inner surface (118) of the tire (108);
moving the beam path (114) and the inner surface (118) relative to each other;
wherein a relative movement of an intersection of the beam path (114) and the inner surface (118) defines a positioning path (144) across the inner surface (118) of the tire (108) and a velocity along the positioning path (144); and
wherein the positioning path (144) defines at each point a path direction (145) along the positioning path (144), the path direction (145) having a first directional portion (170) in the circumferential direction (142) and a second directional portion (172) parallel to the tire rotation axis (110); and
wherein for at least 70% of the positioning path (144), the first directional portion (170) is greater than the second directional portion (172).

15. A computer program product comprising a program element, wherein the computer program product is adapted, when the program element is executed on a processor device, to perform a method according to claim 14.

## Revendications

1. Dispositif de nettoyage de pneu (102, 202, 302) permettant de nettoyer une surface intérieure (118) d'un pneu (108) au moyen d'un rayonnement laser, ledit dispositif de nettoyage de pneu (102, 202, 302) présentant :
un dispositif de positionnement (106, 128, 136, 138) configuré pour positionner un pneu (108) qui présente une surface intérieure (118) et définit une direction circonférentielle (142) et un axe de rotation de pneu (110) ;
une tête de nettoyage (112) configurée pour positionner un chemin d'émission (114) et émettre un rayon laser (116) sur la surface intérieure (118) du pneu (108) le long du chemin d'émission (114) ;
un dispositif de commande (120) configuré pour déplacer le chemin d'émission (114) et la surface intérieure (118) l'un par rapport à l'autre ;
où un déplacement relatif d'un point d'intersection (132) du chemin d'émission (114) avec la surface intérieure (118) définit un chemin de positionnement (144) au-dessus de la surface intérieure (118) du pneu (108) ainsi qu'une vitesse le long du chemin de positionnement (144) ;
où le chemin de positionnement (144) définit en chaque point une direction de chemin (145) le long du chemin de positionnement (144) et où la direction de chemin (145) présente une première part de direction (170) dans la direction circonférentielle (142) et dans une seconde part de direction (172) parallèle à l'axe de rotation de pneu (110),
**caractérisé en ce que**,
la première part de direction (170) est supérieure à la seconde part de direction (172) pour au moins 70 % du chemin de positionnement (144).

2. Dispositif de nettoyage de pneu (102, 202, 302) selon la revendication 1,
où le déplacement relatif est généré à au moins 50 % grâce à la rotation d'au moins un élément rotatif, en particulier où le au moins un élément rotatif comprend au moins l'un des éléments ci-dessous : le pneu (108), le chemin d'émission (114), un élément optique ;
et/ou
où la vitesse moyenne du point d'intersection (132) dans la direction circonférentielle (142) est supérieure à 5 m/s le long du chemin de positionnement (144).

3. Dispositif de nettoyage de pneu (102, 202, 302) selon l'une quelconque des revendications précédentes,
où le rayon laser (116) génère une pluralité de spots laser (146, 148) sur le chemin de positionnement (144) ;
où chaque spot laser (146, 148) parmi la pluralité de spots laser (146, 148) génère respectivement un spot de traitement sur la surface intérieure (118) ;
où plusieurs spots de traitement (150) successifs définissent sur la surface intérieure (118) du pneu (108) un chemin de traitement (152) le long duquel la surface intérieure (118) est nettoyée ; et
où le chemin de traitement (152) s'étend au moins par sections sur des orbites parallèles ;
et/ou
où le chemin de traitement (152) s'étend au moins par sections de manière hélicoïdale.

4. Dispositif de nettoyage de pneu (102, 202, 302) selon l'une quelconque des revendications précédentes,
où le rayon laser (116) génère une pluralité de spots laser (146, 148) sur le chemin de positionnement (144) et où des spots laser (146, 148) adjacents se chevauchent ; et où en particulier deux spots laser (146, 148) adjacents se chevauchent le long d'une première direction sur une longueur correspondant à 0 %, 10 %, 50 %, 67 %, 75 %, 80 % ou 90 % de l'étendue d'un des spots laser (146, 148) dans la première direction.

5. Dispositif de nettoyage de pneu (102, 202, 302) selon l'une quelconque des revendications précédentes,
où le dispositif de positionnement (106, 128, 136, 138) est configuré pour faire tourner le pneu (108) et où le dispositif de commande (120) est configuré pour provoquer le déplacement relatif du point d'intersection (132) au moins partiellement grâce à la rotation du pneu (108) autour de son axe de rotation ;
et/ou
où la tête de nettoyage (112) est configurée pour faire tourner le chemin d'émission (114) et le dispositif de commande (120) est configuré pour provoquer le déplacement relatif du point d'intersection (132) au moins partiellement grâce à une rotation du chemin d'émission (114), en particulier grâce à une rotation du chemin d'émission (114) autour de l'axe de rotation de pneu (110).

6. Dispositif de nettoyage de pneu (102, 202, 302) présentant les caractéristiques de l'une quelconque des revendications 2 ou 5, où le déplacement relatif du point d'intersection (132) intervient à plus de 90 % grâce à la rotation du pneu (108) et/ou grâce à la rotation du chemin d'émission (114).

7. Dispositif de nettoyage de pneu (102, 202, 302) selon l'une quelconque des revendications 2, 5 ou 6, présentant en outre un élément de compensation (192) qui compense la rotation du rayon laser (116), générée par la rotation du chemin d'émission (114), autour de son axe central (194).

8. Dispositif de nettoyage de pneu (102, 202, 302) selon l'une quelconque des revendications 3 à 7, où le spot laser (146, 148) est un spot laser (146, 148) rectangulaire et où, pour au moins 70 % du chemin de positionnement (144), la direction de chemin (145) forme avec un côté du spot laser (146, 148) rectangulaire un angle compris entre 80° et 100°, en particulier un angle de 90°, en particulier où le spot laser (146, 148) rectangulaire présente un côté plus long et un côté plus court et la direction de chemin (145) forme avec le côté plus long du spot laser (146, 148) rectangulaire un angle compris entre 80° et 100°, en particulier un angle de 90°.

9. Système de nettoyage de pneu, présentant :
un dispositif de nettoyage de pneu (102, 202, 302) selon l'une quelconque des revendications 1 à 8 ; et
une source laser (104) permettant de générer le rayon laser (116) ;
en particulier présentant en outre :
un autre dispositif de nettoyage de pneu (202, 302) selon l'une quelconque des revendications 1 à 8 ; et
un dispositif de commutation (186) au moyen duquel le rayon laser (116) peut être amené alternativement au dispositif de nettoyage de pneu (102) ou à l'autre dispositif de nettoyage de pneu (202, 302).

10. Pneu (108) présentant une surface intérieure (118), où la surface intérieure (118) est nettoyée au moyen d'un dispositif de nettoyage de pneu (102, 202, 302) selon l'une quelconque des revendications 1 à 8 ;
présentant en outre :
un chemin de traitement (152) le long duquel la surface intérieure (118) est nettoyée ;
où
le chemin de traitement (152) définit en chaque point une direction de chemin (145) le long du chemin de traitement (152), où la direction de chemin (145) présente une première part de direction (170) dans la direction circonférentielle (142) et dans une seconde part de direction (172) parallèle à l'axe de rotation de pneu (110) ; et
la première part de direction (170) est supérieure à la seconde part de direction (172) pour au moins 70 % du chemin de traitement (152).

11. Pneu (108) selon la revendication 10, où le chemin de traitement (152) présente une pluralité de spots de traitement (150), où des spots de traitement (150) adjacents se chevauchent ou se touchent ; et où en particulier respectivement deux spots de traitement (150) adjacents se chevauchent le long d'une première direction sur une longueur qui correspond à 0 %, 50 %, 67 %, 75 %, 80 % ou 90 % de l'étendue de l'un des spots de traitement (150) dans la première direction ;
où en particulier :
le chemin de traitement (152) s'étend au moins par sections sur des orbites parallèles ;
et/ou
le chemin de traitement (152) s'étend au moins par sections de manière hélicoïdale.

12. Pneu (108) selon la revendication 11,
où le spot de traitement est un spot de traitement rectangulaire et où, pour au moins 90 % du chemin de traitement (152), la direction de chemin (145) forme avec un côté du spot de traitement (150) rectangulaire un angle compris entre 80° et 100°, en particulier un angle de 90°, en particulier où le spot de traitement rectangulaire présente un côté plus long et un côté plus court et la direction de chemin (145) forme avec le côté plus long du spot de traitement (150) rectangulaire un angle compris entre 80° et 100°, en particulier un angle de 90°.

13. Pneu (108) selon l'une quelconque des revendications 11 ou 12, où des spots de traitement (150) adjacents dans la direction de l'axe de rotation de pneu (110) sont décalés l'un par rapport à l'autre dans la direction circonférentielle (142) du pneu (108) de plus de 10 % de leur étendue (158) dans la direction circonférentielle (142).

14. Procédé de nettoyage d'un pneu (108), le procédé comprenant les étapes consistant à :
positionner un pneu (108) présentant une surface intérieure (118) et définissant une direction circonférentielle (142) et un axe de rotation de pneu (110) ;
positionner un chemin d'émission (114) et émettre un rayon laser (116) le long du chemin d'émission (114) sur la surface intérieure (118) du pneu (108) ;
déplacer le chemin d'émission (114) et la surface intérieure (118) l'un par rapport à l'autre ;
où un déplacement relatif d'un point d'intersection du chemin d'émission (114) avec la surface intérieure (118) définit un chemin de positionnement (144) au-dessus de la surface intérieure (118) du pneu (108) ainsi qu'une vitesse le long du chemin de positionnement (144) ; et
où le chemin de positionnement (144) définit en chaque point une direction de chemin (145) le long du chemin de positionnement (144), où la direction de chemin (145) présente une première part de direction (170) dans la direction circonférentielle (142) et dans une seconde part de direction (172) parallèle à l'axe de rotation de pneu (110) ; et
où la première part de direction (170) est supérieure à la seconde part de direction (172) pour au moins 70 % du chemin de positionnement (144).

15. Produit-programme informatique présentant un élément de programme, où le produit-programme informatique est conçu pour mettre en oeuvre un procédé selon la revendication 14 lorsque l'élément de programme est mis en oeuvre sur un dispositif formant processeur.
